# FASCICULE DE BREVET EUROPEEN

(11) **EP 3 510 826 B1**
(45) Date de publication et mention de la délivrance du brevet: **21.04.2021**
(21) Numéro de dépôt: 17761900.4
(22) Date de dépôt: 08.09.2017
(51) Int. Cl.: H04W 72/02, H04W 84/12, H04W 74/08

(54) **PROCÉDURE D'ACCÈS ALÉATOIRE COORDONNÉ À UN RÉSEAU DE COMMUNICATION SANS-FIL**
VERFAHREN FÜR KOORDINIERTEN DIREKTZUGRIFF AUF EIN DRAHTLOSKOMMUNIKATIONSNETZWERK
PROCEDURE FOR COORDINATED RANDOM ACCESS TO A WIRELESS COMMUNICATION NETWORK

(30) Priorité: 12.09.2016 FR 1658468
(43) Date de publication de la demande: 17.07.2019
(73) Titulaire: Sagemcom Broadband SAS, 92500 Rueil-Malmaison (FR)
(72) Inventeur: LALAM, Massinissa, 92500 Rueil Malmaison (FR)
(74) Mandataire: Cabinet Le Guen Maillet
(86) Numéro de dépôt international: PCT/EP2017/072572
(87) Numéro de publication internationale: WO 2018/046657

(56) Documents cités:
- WO-A1-2016/126370
- WO-A1-2016/126370
- US-A1- 2016 143 006
- US-A1- 2016 143 006
- KISEON RYU (LG ELECTRONICS): "UL MU Procedure ; 11-15-0365-00-00ax-ul-mu-procedure", IEEE DRAFT; 11-15-0365-00-00AX-UL-MU-PROCEDURE, IEEE-SA MENTOR, PISCATAWAY, NJ USA, vol. 802.11ax, 9 mars 2015 (2015-03-09), pages 1-16, XP068083020,
- KISEON RYU (LG ELECTRONICS): "Trigger type specific information ; 11-15-1345-00-00ax-trigger-type-specific-i nformation", IEEE DRAFT; 11-15-1345-00-00AX-TRIGGER-TYPE-SPECIFIC-I NFORMATION, IEEE-SA MENTOR, PISCATAWAY, NJ USA, vol. 802.11ax, 9 novembre 2015 (2015-11-09), pages 1-16, XP068099321,
- KISEON RYU (LG ELECTRONICS): "UL MU Procedure ; 11-15-0365-00-00ax-ul-mu-procedure", IEEE DRAFT; 11-15-0365-00-00AX-UL-MU-PROCEDURE, IEEE-SA MENTOR, PISCATAWAY, NJ USA, vol. 802.11ax, 9 March 2015 (2015-03-09), pages 1-16, XP068083020, [retrieved on 2015-03-09]
- KISEON RYU (LG ELECTRONICS): "Trigger type specific information ; 11-15-1345-00-00ax-trigger-type-specific-i nformation", IEEE DRAFT; 11-15-1345-00-00AX-TRIGGER-TYPE-SPECIFIC-I NFORMATION, IEEE-SA MENTOR, PISCATAWAY, NJ USA, vol. 802.11ax, 9 November 2015 (2015-11-09), pages 1-16, XP068099321, [retrieved on 2015-11-09]

## Description

La présente invention concerne des procédures d'accès aléatoire coordonné à un medium d'un réseau de communication sans-fil, dans lesquelles des transmissions ascendantes de type OFDMA (« Orthogonal Frequency Division Multiple Access » en anglais) sont effectuées.

La technologie d'accès multiple à un médium par répartition orthogonale en fréquence OFDMA est répandue dans le domaine des réseaux de communication sans-fil. On la retrouve notamment dans le domaine des réseaux de téléphonie mobile de 4^{e} génération (« 4G ») pour effectuer des communications descendantes (« downlink » en anglais) depuis des stations de base, appelées « eNodeB », vers des terminaux, appelés « UE » (« User Equipment » en anglais).

La technologie OFDMA est aussi envisagée, que ce soit pour des communications descendantes ou pour des communications ascendantes (« uplink » en anglais) dans le cadre du standard IEEE 802.11ax. Voir notamment le document *«* IEEE P802.11ax / Draft 0.2, Mar. 2016 *».* En particulier, une procédure d'accès aléatoire coordonné utilisant la technologie OFDMA a été proposée, en ce qui concerne certaines communications ascendantes, dans le document *«* UL OFDMA-based Random Access Procedure, IEEE 802.11-1511105r0, Sep. 2015 *».* Cette procédure d'accès aléatoire coordonné est envisagée pour permettre d'optimiser l'utilisation de la puissance radio pour des terminaux en limite de portée radio et/ou pour des terminaux à capacités de transmission limitées, comme c'est le cas généralement dans le cadre de l'Internet des Objets IoT (« Internet of Things » en anglais). La procédure d'accès aléatoire coordonné permet aussi de planifier l'accès au medium pour contrôler les concurrences d'accès au medium, notamment pour ce qui concerne les messages de contrôle tels que des requêtes de sondage (« Probe Requests » en anglais) ou des requêtes d'association (« Association Requests » en anglais) ou le trafic lié à l'Internet des Objets IoT pour des terminaux communiquant peu d'information et/ou de manière sporadique. Cette procédure est dite à accès aléatoire car elle est déclenchée par un point d'accès qui ne sait pas quels terminaux visés par ladite procédure vont effectivement saisir l'opportunité de transmission offerte par ladite procédure. Cette procédure est dite à accès coordonné car elle est gérée de manière centralisée par ce point d'accès, qui décide à quels terminaux et quand est offerte l'opportunité de transmission.

Afin de déclencher la procédure d'accès aléatoire coordonné vis-à-vis de communications ascendantes dans le standard IEEE 802.11ax, un point d'accès AP (« Access Point » en anglais) transmet à un ou plusieurs terminaux, aussi appelés « stations » (« Station » en anglais), une trame de déclenchement d'accès aléatoire coordonné TF-R (« Trigger Frame for Random access » en anglais). La trame de déclenchement d'accès aléatoire coordonné TF-R peut être transmise en mode point-à-point (« unicast mode » en anglais), en mode point-multipoint (« multicast mode » en anglais) ou en mode de diffusion (« broadcast mode » en anglais), en fonction du ou des terminaux auxquels le point d'accès AP souhaite fournir une opportunité d'accès au medium. La trame de déclenchement d'accès aléatoire coordonné TF-R définit quelles ressources fréquentielles, aussi appelées « unités de ressources » RU (« Resource Unit » en anglais), sont candidates pour effectuer les transmissions ascendantes de type OFDMA dans le cadre de l'accès aléatoire coordonné initié par ladite trame de déclenchement d'accès aléatoire coordonné TF-R. Chaque ressource fréquentielle est un ensemble prédéfini et unique de plusieurs sous-porteuses, chaque sous-porteuse ne pouvant appartenir qu'à une seule ressource fréquentielle ainsi définie. Un terminal voulant saisir une opportunité offerte dans le cadre de l'accès aléatoire coordonné initié par ladite trame de déclenchement d'accès aléatoire coordonné TF-R gère un compteur, appelé compteur OBO (« OFDMA Back-Off » en anglais), initialisé avec une valeur entière choisie aléatoirement dans une fenêtre de contention CW (« Contention Window » en anglais). Lorsque ledit terminal reçoit une trame de déclenchement d'un accès aléatoire coordonné TF-R qui lui est adressée, ledit terminal mobile parcourt ladite trame de déclenchement d'accès aléatoire coordonné TF-R pour identifier une liste de ressource(s) fréquentielle(s) que le point d'accès AP lui autorise à utiliser, et décrémente son compteur OBO d'une quantité d'unités égale à la cardinalité de ladite liste de ressource(s) fréquentielle(s) sans toutefois devenir négatif. Lorsque le compteur OBO devient nul, ledit terminal choisit de manière aléatoire une ressource fréquentielle parmi celles qui lui sont autorisées par la trame de déclenchement d'accès aléatoire coordonné TF-R ; si le compteur OBO reste strictement positif, ledit terminal attend de recevoir une nouvelle trame de déclenchement d'accès aléatoire coordonné TF-R pour réitérer les opérations susmentionnées et déterminer si ledit terminal peut effectuer une transmission ascendante de type OFDMA dans le cadre de la procédure d'accès aléatoire coordonné. En cas de transmission ascendante réussie (acquittement de la dite transmission reçu en voie descendante en provenance du point d'accès AP), le terminal voulant saisir à nouveau une opportunité offerte dans le cadre de l'accès aléatoire coordonné initialise à nouveau son compteur OBO avec une valeur entière choisie aléatoirement dans une nouvelle fenêtre de contention CW dont la taille pourra être différente de celle utilisée précédemment. Par exemple, la taille de la nouvelle fenêtre de contention CW peut être réinitialisée à une valeur minimale.

En cas de transmission ascendante non réussie (pas d'acquittement reçu en voie descendante en provenance du point d'accès AP), le terminal peut initialiser à nouveau son compteur OBO avec une valeur entière choisie aléatoirement dans une nouvelle fenêtre de contention CW dont la taille peut aussi être différente. Par exemple, la taille de la nouvelle fenêtre de contention CW peut être agrandie de manière exponentielle jusqu'à une valeur maximale à chaque tentative infructueuse (non acquittée) de transmission ascendante.

Le mécanisme ci-dessus permet de garantir une certaine équité (« faimess » en anglais) d'accès au medium du réseau de communication sans-fil entre les différents terminaux qui y sont connectés. Cette approche souffre cependant d'un manque de performance, notamment vis-à-vis de terminaux en limite de portée radio et/ou ayant des capacités de transmission radio réduites.

Le document US 2016/143006 A1 décrit une station Wi-Fi à haute efficacité, un point d'accès et une méthode de contention d'accès aléatoire dans un réseau sans fil.

Le document WO 2016/126370 A1 décrit des méthodes associées à un accès par canal distribué OFDMA faisant appel à un dispositif informatique pouvant générer une trame de déclenchement associée à des attributions de ressources à accès aléatoire. Il est souhaitable de pallier ces inconvénients de l'état de la technique.

L'invention concerne un procédé implémenté par un point d'accès d'un réseau de communication sans-fil auquel est connectée une pluralité de terminaux, le point d'accès transmettant dans le réseau de communication sans-fil des trames de déclenchement de procédure d'accès aléatoire coordonné, chaque trame de déclenchement de procédure d'accès aléatoire coordonné offrant une opportunité d'accès au medium dudit réseau de communication sans-fil à chaque terminal auquel ladite trame est destinée, chaque terminal qui saisit ladite opportunité d'accès au medium effectuant une transmission ascendante de type OFDMA vers ledit point d'accès en réponse à ladite trame. Le procédé est tel que le point d'accès inclut dans chaque trame de déclenchement de procédure d'accès aléatoire coordonné des informations représentatives d'une méthode de sélection de ressource fréquentielle, choisie par ledit point d'accès selon une politique prédéfinie, parmi les deux suivantes : une méthode de sélection aléatoire, selon laquelle chaque terminal concerné est supposé sélectionner aléatoirement une ressource fréquentielle parmi un ensemble de ressources fréquentielles candidates soumises par ledit point d'accès dans ladite trame de déclenchement de procédure d'accès aléatoire coordonné ; et une méthode de sélection libre, selon laquelle chaque terminal concerné est supposé sélectionner librement une ressource fréquentielle parmi un ensemble de ressources fréquentielles candidates soumises par ledit point d'accès dans ladite trame de déclenchement de procédure d'accès aléatoire coordonné. Ainsi, grâce au choix proposé par les deux méthodes de sélection de ressource fréquentielle pour effectuer les transmissions ascendantes de type OFDMA, un compromis entre équité d'accès au medium du réseau de communication sans-fil et performance des transmissions, notamment pour des terminaux en limite de portée radio et/ou ayant des capacités de transmission radio réduite, peut être trouvé.

Selon un mode de réalisation particulier, le point d'accès inclut en outre dans chaque trame de déclenchement de procédure d'accès aléatoire coordonné des informations représentatives d'une puissance de transmission de ladite trame par ledit point d'accès. Cela permet aux terminaux d'utiliser ladite trame de déclenchement de procédure d'accès aléatoire coordonné pour déterminer dynamiquement un niveau d'atténuation subie par ladite trame lors de sa transmission.

Selon un mode de réalisation particulier, le point d'accès inclut en outre dans chaque trame de déclenchement de procédure d'accès aléatoire coordonné des informations représentatives d'une puissance de réception attendue par ledit point d'accès en réception de chaque transmission ascendante de type OFDMA effectuée en réponse à ladite trame. Cela permet aux terminaux d'utiliser ladite trame de déclenchement de procédure d'accès aléatoire coordonné pour déterminer dynamiquement une puissance de transmission à utiliser pour chaque transmission ascendante de type OFDMA effectuée en réponse à ladite trame.

Selon un mode de réalisation particulier, le point d'accès transmet chaque trame de déclenchement de procédure d'accès aléatoire coordonné au moins via les ressources fréquentielles candidates soumises dans ladite trame et parmi lesquelles les terminaux auxquels ladite trame est destinée sont supposés effectuer la sélection de ressource fréquentielle pour effectuer les transmissions ascendantes de type OFDMA en réponse à ladite trame. Ainsi, ladite trame de déclenchement de procédure d'accès aléatoire coordonné suffit aux terminaux pour déterminer dynamiquement la puissance de transmission à utiliser sur chaque ressource fréquentielle candidate pour la transmission ascendante de type OFDMA effectuée en réponse à ladite trame.

Selon un mode de réalisation particulier, le point d'accès inclut en outre dans chaque trame de déclenchement de procédure d'accès aléatoire coordonné des informations représentatives du schéma de modulation et de codage le moins robuste autorisé par ledit point d'accès pour effectuer chaque transmission ascendante de type OFDMA en réponse à ladite trame. Ainsi, les terminaux peuvent prendre en compte lesdites informations représentatives du schéma de modulation et de codage pour sélectionner librement les ressources fréquentielles à utiliser respectivement pour effectuer les transmissions ascendantes de type OFDMA en réponse à ladite trame.

Selon un mode de réalisation particulier, le point d'accès collecte des premières statistiques relatives aux ressources sélectionnées par lesdits terminaux mobiles pour effectuer les transmissions ascendantes de type OFDMA en réponse aux trames de déclenchement de procédure d'accès aléatoire coordonné qui incluent des informations représentatives de la méthode de sélection libre. Cela permet au point d'accès de connaître quelles sont les ressources fréquentielles privilégiées par les terminaux lorsqu'ils ne sont pas contraints de choisir aléatoirement la ressource fréquentielle à utiliser.

Selon un mode de réalisation particulier, le point d'accès détermine les ressources fréquentielles candidates soumises dans chaque trame de déclenchement de procédure d'accès aléatoire coordonné, en fonction desdites premières statistiques collectées vis-à-vis des terminaux auxquels ladite trame de déclenchement de procédure d'accès aléatoire coordonné est destinée. Cela permet d'augmenter la performance du réseau de communication sans-fil en soumettant des ressources fréquentielles candidates qui conviennent globalement aux terminaux.

Selon un mode de réalisation particulier, le point d'accès effectue un regroupement de terminaux auquel une trame de déclenchement de procédure d'accès aléatoire coordonné est destinée, en fonction desdites premières statistiques collectées vis-à-vis des terminaux connectés au réseau de communication sans-fil. Cela permet d'augmenter la performance du réseau de communication sans-fil en effectuant des regroupements qui limitent les risques de collision apparaissant lorsqu'au moins deux terminaux choisissent la même ressource fréquentielle pour une même opportunité d'accès au medium.

Selon un mode de réalisation particulier, le point d'accès collecte des secondes statistiques relatives aux ressources sélectionnées par lesdits terminaux pour effectuer les transmissions ascendantes de type OFDMA en réponse aux trames de déclenchement de procédure d'accès aléatoire coordonné qui incluent des informations représentatives de la méthode de sélection aléatoire. Cela permet de classifier les terminaux en fonction de leur comportement vis-à-vis des performances du réseau de communication sans-fil, et d'agir en conséquence.

Selon un mode de réalisation particulier, le point d'accès vérifie que les sélections de ressources fréquentielles pour effectuer les transmissions ascendantes de type OFDMA en réponse aux trames de déclenchement de procédure d'accès aléatoire coordonné qui incluent des informations représentatives de la méthode de sélection aléatoire présentent effectivement un caractère aléatoire. Cela permet de détecter des terminaux qui nuisent à la performance du réseau de communication sans-fil en utilisant un générateur aléatoire biaisé, et de prendre des contremesures adaptées.

Selon un mode de réalisation particulier, le point d'accès inclut en outre, dans chaque trame de déclenchement de procédure d'accès aléatoire coordonné pour laquelle le point d'accès a choisi la méthode de sélection libre, des informations représentatives d'une règle de sélection, parmi un ensemble prédéfini de règles de sélection, que chaque terminal concerné est supposé appliquer pour sélectionner librement une dite ressource fréquentielle parmi l'ensemble de ressources fréquentielles candidates soumises par ledit point d'accès dans ladite trame de déclenchement de procédure d'accès aléatoire coordonné. Ainsi, le point d'accès peut guider les terminaux pour augmenter les performances du réseau de communication sans-fil, tout en laissant une certaine liberté aux terminaux de choisir les ressources fréquentielles qui leur conviennent le mieux pour effectuer les transmissions ascendantes de type OFDMA en réponse à ladite trame.

Selon un mode de réalisation particulier, le point d'accès indique, dans des balises envoyées par le point d'accès pour synchroniser le réseau de communication sans-fil, que le point d'accès est apte à déclencher des procédures d'accès aléatoire coordonné.

Selon un mode de réalisation particulier, le point d'accès indique, dans les balises envoyées par le point d'accès pour synchroniser le réseau de communication sans-fil, une information représentative de prochains instants de transmission de trame de déclenchement de procédure d'accès aléatoire coordonné.

L'invention concerne également un point d'accès destiné à gérer un réseau de communication sans-fil auquel est connectée une pluralité de terminaux, le point d'accès étant configuré pour transmettre dans le réseau de communication sans-fil des trames de déclenchement de procédure d'accès aléatoire coordonné, chaque trame de déclenchement de procédure d'accès aléatoire coordonné offrant une opportunité d'accès au medium dudit réseau de communication sans-fil à chaque terminal auquel ladite trame est destinée, chaque terminal qui saisit ladite opportunité d'accès au medium effectuant une transmission ascendante de type OFDMA vers ledit point d'accès en réponse à ladite trame. Le point d'accès est configuré pour inclure dans chaque trame de déclenchement de procédure d'accès aléatoire coordonné des informations représentatives d'une méthode de sélection de ressource fréquentielle, choisie par ledit point d'accès selon une politique prédéfinie, parmi les deux suivantes : une méthode de sélection aléatoire, selon laquelle chaque terminal concerné est supposé sélectionner aléatoirement une ressource fréquentielle parmi un ensemble de ressources fréquentielles candidates soumises par ledit point d'accès dans ladite trame de déclenchement de procédure d'accès aléatoire coordonné ; et une méthode de sélection libre, selon laquelle chaque terminal concerné est supposé sélectionner librement une ressource fréquentielle parmi un ensemble de ressources fréquentielles candidates soumises par ledit point d'accès dans ladite trame de déclenchement de procédure d'accès aléatoire coordonné.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la Fig. 1 illustre schématiquement un système de communication sans-fil dans lequel la présente invention peut être implémentée ;
- la Fig. 2A illustre schématiquement un exemple d'architecture matérielle d'un point d'accès du système de communication sans-fil ;
- la Fig. 2B illustre schématiquement un exemple d'architecture matérielle d'un terminal mobile du système de communication sans-fil ;
- la Fig. 3 illustre schématiquement un algorithme, exécuté par le point d'accès, pour initier une procédure d'accès aléatoire coordonné ;
- la Fig. 4 illustre schématiquement un algorithme, exécuté par au moins un terminal du système de communication sans-fil, pour bénéficier de la procédure d'accès aléatoire coordonné ;
- la Fig. 5 illustre schématiquement un algorithme, exécuté par le point d'accès, en réception d'une transmission ascendante de type OFDMA dans le cadre de la procédure d'accès aléatoire coordonné ;
- la Fig. 6 illustre schématiquement un algorithme, exécuté par le point d'accès, pour sélectionner des ressources fréquentielles candidates à soumettre à des terminaux du système de communication sans-fil dans le cadre de la procédure d'accès aléatoire coordonné ; et
- la Fig. 7 illustre schématiquement un algorithme, exécuté par le point d'accès, pour effectuer des groupements de terminaux du système de communication sans-fil dans le cadre de la procédure d'accès aléatoire coordonné.

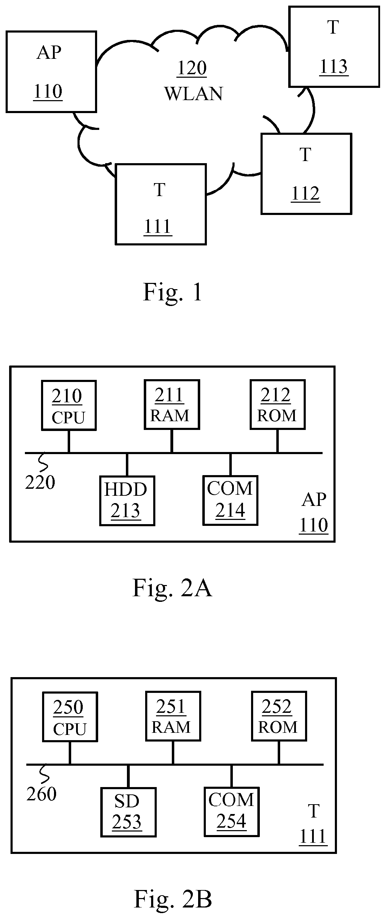

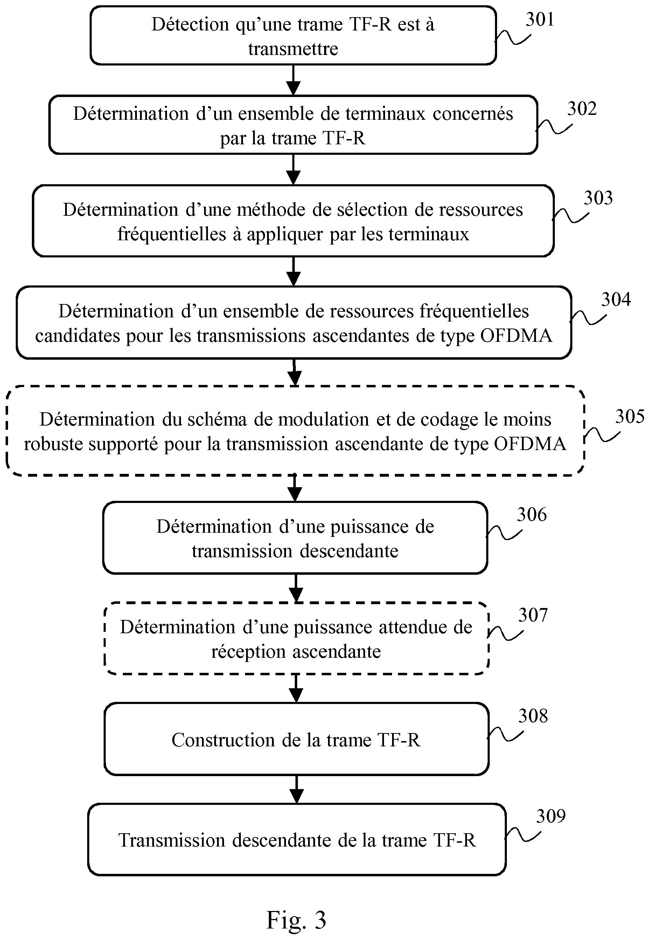

La Fig. 1 illustre schématiquement un système de communication sans-fil dans lequel la présente invention peut être implémentée. Le système de communication comporte un réseau de communication sans-fil 120, un point d'accès AP 110 et une pluralité de terminaux T 111, 112, 113 connectés au réseau de communication sans-fil 120. Dans un mode de réalisation particulier, le réseau de communication sans-fil 120 est un réseau local WLAN (« Wireless Local Area Network » en anglais), préférentiellement conforme aux principes de la famille de standard IEEE 802.11 (à l'exception des procédures d'accès aléatoire coordonné, telles que décrites ci-après en relation avec les Figs. 3 à 7). Dans le cadre de la famille de standard IEEE 802.11, il est considéré qu'un terminal T est connecté au réseau de communication sans-fil 120 lorsque ledit terminal T est capable de s'authentifier (échange de trames d'authentification) et de s'associer (échange de trames d'association - ou de réassociation) avec succès auprès du point d'accès AP 110 via le réseau de communication sans-fil 120 (cas de réseau privé), ou lorsque ledit terminal T est capable de s'associer (échange de trames d'association - ou de réassociation) avec succès auprès du point d'accès AP 110 (cas de réseau ouvert).

Le point d'accès AP 110 est en charge de gérer le réseau de communication sans-fil 120, d'effectuer des communications descendantes vers les terminaux T 111, 112, 113 pour leur transférer des données et de permettre aux terminaux T 111, 112, 113 d'effectuer des transmissions ascendantes, vers ledit point d'accès AP 110 pour lui transférer des données, dont au moins une partie sont des transmissions ascendantes de type OFDMA. Des transmissions ascendantes d'autres types, par exemple de type OFDM, peuvent donc aussi être mises en œuvre dans le réseau de communication sans-fil 120, à d'autres intervalles de temps que les transmissions ascendantes de type OFDMA.

Les communications dans le réseau de communication sans-fil 120 s'effectuent en s'appuyant sur un ensemble prédéfini de ressources fréquentielles. Chaque ressource fréquentielle correspond à un groupe prédéfini de plusieurs sous-porteuses, identifié de manière unique. Par exemple, le standard IEEE 802.11 ax définit des groupes de sous-porteuses ayant au minimum 26 sous-porteuses espacées de 78.125 kHz. Le point d'accès AP 110 supporte l'envoi de trame de déclenchement de la procédure d'accès aléatoire coordonné. Les terminaux T 111, 112, 113 supportent la réception de la trame de déclenchement de la procédure d'accès aléatoire coordonné et peuvent mettre en œuvre ladite procédure d'accès aléatoire coordonné à la réception de ladite trame de déclenchement.

La **Fig. 2A** illustre schématiquement un exemple d'architecture matérielle du point d'accès AP 110. Le point d'accès AP 110 comporte alors, reliés par un bus de communication 220 : un processeur ou CPU (« Central Processing Unit » en anglais) 210 ; une mémoire vive RAM (« Random Access Memory» en anglais) 211 ; une mémoire morte ROM (« Read Only Memory » en anglais) 212 ; une unité de stockage ou un lecteur de support de stockage, tel qu'un disque dur HDD (« Hard Disk Drive » en anglais) 213 ; et une interface 214 permettant de gérer le réseau de communication sans-fil 120 et de communiquer avec les terminaux T 111, 112, 113 du réseau de communication sans-fil 120.

Le processeur 210 est capable d'exécuter des instructions chargées dans la RAM 211 à partir de la ROM 212, d'une mémoire externe (non représentée), d'un support de stockage, ou d'un réseau de communication. Lorsque le point d'accès AP 110 est mis sous tension, le processeur 210 est capable de lire de la RAM 211 des instructions et de les exécuter. Ces instructions forment un programme d'ordinateur causant l'implémentation, par le processeur 210, de tout ou partie des algorithmes et étapes décrits ci-après en relation avec le point d'accès AP 110.

Ainsi, tout ou partie des algorithmes et étapes décrits ci-après en relation avec le point d'accès AP 110 peut être implémenté sous forme logicielle par exécution d'un ensemble d'instructions par une machine programmable, telle qu'un DSP (« Digital Signal Processor » en anglais) ou un microcontrôleur, ou sous forme matérielle par une machine ou un composant dédié, tel qu'un FPGA (« Field-Programmable Gate Array » en anglais) ou un ASIC (« Application-Specific Integrated Circuit » en anglais).

La **Fig. 2B** illustre schématiquement un exemple d'architecture matérielle d'un terminal configuré pour pouvoir communiquer via le réseau de communication sans-fil 120, tel que le terminal T 111, 112 ou 113. Considérons à titre illustratif que la Fig. 2B représente schématiquement un exemple d'architecture matérielle du terminal T 111. Le terminal T 111 comporte alors, reliés par un bus de communication 260 : un processeur ou CPU 250 ; une mémoire vive RAM 251 ; une mémoire morte ROM 252 ; une unité de stockage ou un lecteur de support de stockage, tel qu'un lecteur de cartes SD (« Secure Digital » en anglais) 253 ; et une interface 254 permettant de communiquer via le réseau de communication sans-fil 120.

Le processeur 250 est capable d'exécuter des instructions chargées dans la RAM 251 à partir de la ROM 252, d'une mémoire externe (non représentée), d'un support de stockage, ou d'un réseau de communication. Lorsque le terminal T 111 est mis sous tension, le processeur 250 est capable de lire de la RAM 251 des instructions et de les exécuter. Ces instructions forment un programme d'ordinateur causant la mise en œuvre, par le processeur 250, de tout ou partie des algorithmes et étapes décrits ci-après en relation avec les terminaux T 111, 112, 113.

Ainsi, tout ou partie des algorithmes et étapes décrits ci-après en relation avec les terminaux T 111, 112, 113 peut être implémenté sous forme logicielle par exécution d'un ensemble d'instructions par une machine programmable, telle qu'un DSP ou un microcontrôleur, ou sous forme matérielle par une machine ou un composant dédié, tel qu'un FPGA ou un ASIC.

La **Fig. 3** illustre schématiquement un algorithme, exécuté par le point d'accès AP 110, pour initier une procédure d'accès aléatoire coordonné.

Dans une étape 301, le point d'accès AP 110 détecte qu'une trame de déclenchement d'accès aléatoire coordonné TF-R est à transmettre pour initier une procédure d'accès aléatoire coordonné au medium du réseau de communication sans-fil 120. Selon un premier exemple, le point d'accès AP 110 émet une telle trame de déclenchement d'accès aléatoire coordonné TF-R à intervalles réguliers, de manière à cadencer les accès au medium en répartissant (pas forcément de manière équitable) au fil du temps les opportunités d'accès au medium pour chacun des terminaux T connectés au réseau de communication sans-fil 120 et supportant la procédure d'accès aléatoire coordonné, de sorte que les procédures d'accès aléatoire coordonné s'enchaînent les unes après les autres. Selon un second exemple, le point d'accès AP 110 émet une telle trame de déclenchement d'accès aléatoire coordonné TF-R à des instants résultant d'une négociation avec des terminaux ayant demandé la mise en place de ce type d'accès. Selon un troisième exemple, le point d'accès AP 110 émet de telles trames de déclenchement d'accès aléatoire coordonné TF-R tout en laissant, entre les procédures d'accès aléatoire coordonné, des intervalles de temps pendant lesquels les terminaux mobiles connectés au réseau de communication sans-fil 120 peuvent tenter d'accéder au medium de leur propre initiative, par exemple en s'appuyant sur des transmissions de type OFDM (« Orthogonal Frequency Division Multiplex » en anglais) et une technique d'accès au medium de type CSMA/CA (« Carrier Sense Multiple Access with Collision Avoidance » en anglais). A noter que dans ce dernier cas, l'ensemble des ressources fréquentielles utilisables dans le réseau de communication sans-fil 120 est utilisé par chaque terminal mobile T pour effectuer chaque transmission ascendante, contrairement aux principes édictés par la technologie OFDMA.

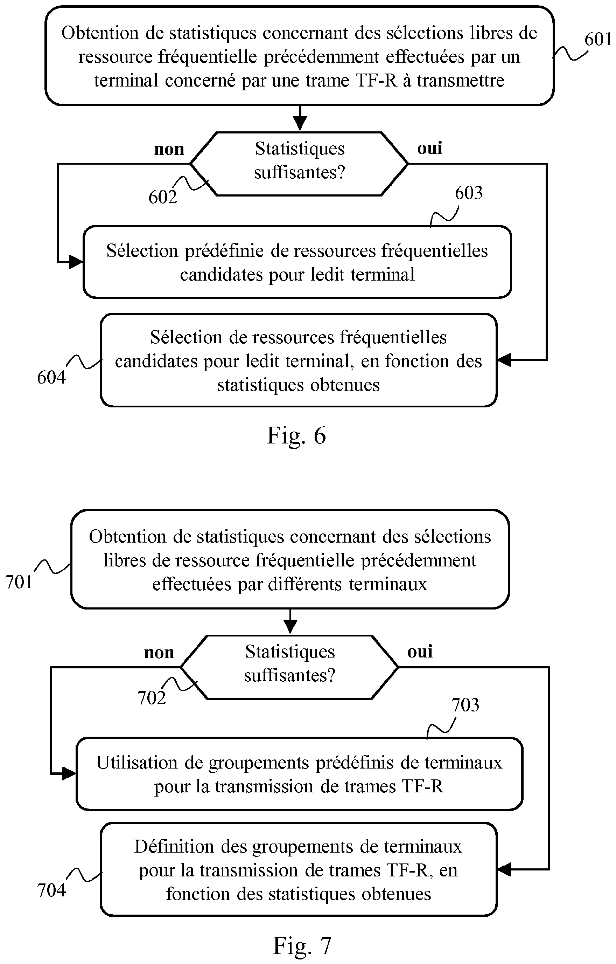

Dans une étape 302, le point d'accès AP 110 détermine un ensemble de terminaux T, connectés au réseau de communication sans-fil 120, concernés par la procédure d'accès aléatoire coordonné qui va être initiée par la trame de déclenchement d'accès aléatoire coordonné TF-R. Le point d'accès AP 110 répartit dans le temps les opportunités d'accès au medium (pas forcément de manière strictement équitable, même si l'équité est un paramètre typiquement important dans la planification des opportunités de transmission) entre au moins une partie des terminaux mobiles T connectés au réseau de communication sans-fil 120. Cette approche de répartition d'accès au medium se retrouve dans la technologie de télécommunication LTE (« Long-Term Evolution » en anglais). Le point d'accès AP 110 peut effectuer des regroupements de terminaux mobiles T autorisés à tenter d'accéder en même temps au medium dans le cadre de la procédure d'accès aléatoire coordonné en s'appuyant sur des statistiques collectées lors de précédentes procédures d'accès aléatoire coordonné, de sorte à limiter les risques de collision et/ou les interférences induites. Cet aspect est détaillé ci-après en relation avec la Fig. 7.

Dans une étape 303, le point d'accès AP 110 détermine une méthode de sélection de ressource fréquentielle, qui est à appliquer par les terminaux T auxquels la trame de déclenchement d'accès aléatoire coordonné TF-R est destinée. La méthode de sélection de ressources fréquentielles est choisie parmi les deux méthodes suivantes :
- méthode de sélection aléatoire, selon laquelle chacun des terminaux T, sélectionne aléatoirement une ressource fréquentielle, à utiliser par ledit terminal T pour effectuer une transmission ascendante de type OFDMA dans le cadre de la procédure d'accès aléatoire coordonné, parmi un ensemble de ressources fréquentielles candidates soumis par le point d'accès AP 110 ; et
- méthode de sélection libre, selon laquelle chacun des terminaux T sélectionne librement la ressource fréquentielle, à utiliser par ledit terminal T pour effectuer une transmission ascendante de type OFDMA dans le cadre de la procédure d'accès aléatoire coordonné, parmi l'ensemble de ressources fréquentielles candidates soumis par le point d'accès AP 110.

Appliquer la méthode de sélection libre permet au point d'accès AP 110 de donner l'opportunité à un ou plusieurs terminaux de réussir à effectuer une transmission ascendante à court-terme. En effet, des terminaux T en limite de portée radio ou à faibles capacités radio peuvent avoir de grandes difficultés à effectuer leurs transmissions ascendantes. Utiliser la technologie OFDMA permet de tirer les bénéfices de la technologie OFDM en concentrant la puissance sur un nombre restreint de sous-porteuses, et la méthode de sélection libre permet en plus (par rapport à la méthode de sélection aléatoire) au terminal de choisir par exemple la ressource fréquentielle qui présente le moins d'atténuation.

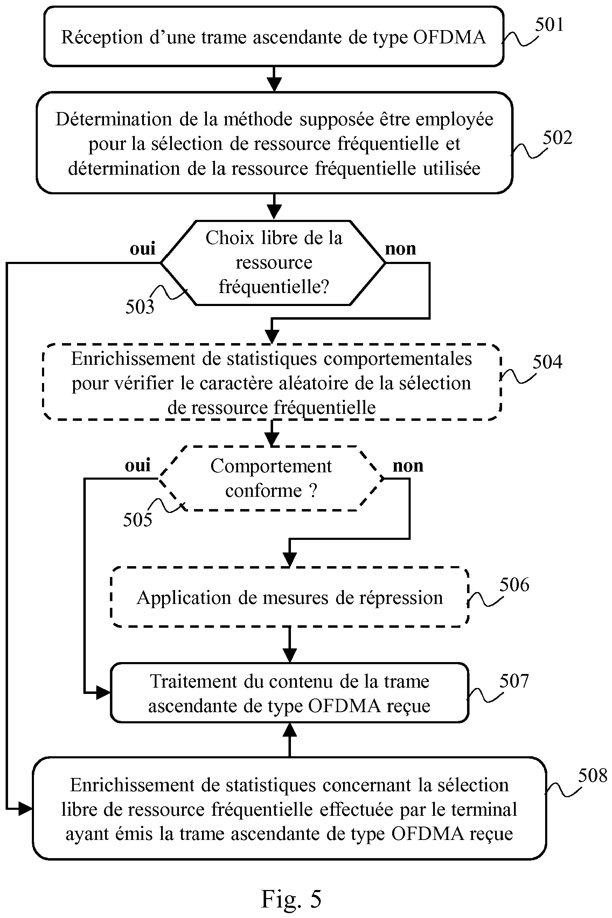

Appliquer la méthode de sélection libre permet aussi au point d'accès AP 110 de collecter des statistiques quant aux ressources fréquentielles préférentiellement utilisées par les terminaux T pour effectuer les transmissions ascendantes, et, grâce à ces statistiques, améliorer les performances de transmission dans le réseau de communication sans-fil 120. De telles statistiques sont abordées ci-après en relation avec les Figs. 5, 6 et 7.

Appliquer la méthode de sélection aléatoire permet de tendre vers une certaine équité d'accès au medium pour lesdits terminaux T, et de réduire les risques de collisions successives lorsque plusieurs terminaux T concernés par la procédure d'accès aléatoire auraient tendance à utiliser, si le choix leur est systématiquement laissé parmi les mêmes ressources fréquentielles utilisables dans le réseau de communication sans-fil 120, en concurrence les mêmes ressources fréquentielles pour effectuer leur transmission ascendante de type OFDMA.

Le point d'accès AP 110 fait la sélection entre la méthode de sélection aléatoire et la méthode de sélection libre en fonction d'une politique prédéfinie.

Dans un mode de réalisation particulier, le point d'accès AP 110 utilise par défaut la méthode de sélection aléatoire, et sélectionne la méthode de sélection libre lorsqu'un critère de performance du réseau de communication n'est pas rempli. Par exemple, le point d'accès AP 110 décide de sélectionner la méthode de sélection libre lorsque ledit point d'accès AP 110 note que les ressources fréquentielles sont utilisées en dessous d'un seuil prédéterminé. Selon un autre exemple, le point d'accès AP 110 décide de sélectionner la méthode de sélection libre lorsque ledit point d'accès AP 110 note qu'au moins un terminal T connecté au réseau de communication sans-fil 120, dans une fenêtre de temps donnée, a effectué une quantité d'accès au medium du réseau de communication sans-fil 120 par le biais de la procédure d'accès aléatoire coordonné inférieure à un seuil prédéterminé.

Dans un autre mode de réalisation particulier, le point d'accès AP 110 utilise par défaut la méthode de sélection libre, et sélectionne la méthode de sélection aléatoire lorsqu'un critère de performance du réseau de communication est rempli. Par exemple, le point d'accès AP 110 décide de sélectionner la méthode de sélection aléatoire lorsque ledit point d'accès AP 110 note que les ressources fréquentielles sont utilisées au-dessus d'un seuil prédéterminé. Selon un autre exemple, le point d'accès AP 110 décide de sélectionner la méthode de sélection aléatoire lorsque ledit point d'accès AP 110 note que chacun des terminaux T connectés au réseau de communication sans-fil 120, dans une fenêtre de temps donnée, a effectué une quantité d'accès au medium du réseau de communication sans-fil 120 supérieure à un seuil prédéterminé.

Dans encore un autre mode de réalisation particulier, le point d'accès AP 110 utilise par défaut la méthode de sélection aléatoire, et sélectionne la méthode de sélection libre lorsqu'un critère de collecte de statistiques auprès desdits terminaux T vis-à-vis d'une préférence quant aux ressources fréquentielles à utiliser n'est pas rempli. En d'autres termes, le point d'accès AP 110 décide de sélectionner la méthode de sélection libre lorsque ledit point d'accès AP 110 considère avoir besoin de plus de statistiques quant aux ressources fréquentielles que lesdits terminaux mobiles préfèrent utiliser.

Dans encore un autre mode de réalisation particulier, le point d'accès AP 110 utilise par défaut la méthode de sélection libre, et sélectionne la méthode de sélection aléatoire lorsqu'un critère de collecte de statistiques auprès desdits terminaux mobiles T vis-à-vis d'une préférence quant aux ressources fréquentielles à utiliser est rempli. En d'autres termes, le point d'accès AP 110 décide de sélectionner la méthode de sélection aléatoire lorsque ledit point d'accès AP 110 considère avoir recueilli suffisamment de statistiques quant aux ressources fréquentielles que lesdits terminaux préfèrent utiliser.

Dans encore un autre mode de réalisation particulier, le point d'accès AP 110 utilise la méthode de sélection aléatoire pour une trame de déclenchement TF-R lorsque le nombre de terminaux T concernés par ladite trame est supérieur à un certain seuil prédéterminé pour un nombre de ressources fréquentielles donné, sinon le point d'accès AP 110 utilise la méthode de sélection libre pour cette trame de déclenchement TF-R.

Dans encore un autre mode de réalisation particulier, le point d'accès AP 110 utilise la méthode de sélection libre pour des terminaux T accédant peu fréquemment au medium du réseau de communication sans-fil 120, i.e. dont la fréquence d'accès audit medium est inférieure à un seuil prédéterminé.

Dans encore un autre mode de réalisation particulier, le point d'accès AP 110 utilise la méthode de sélection libre pour des terminaux T dont le niveau de signal en réception (de trames ascendantes émises par lesdits terminaux) est inférieur à un seuil prédéterminé (longue portée).

Dans encore un autre mode de réalisation particulier, le point d'accès AP 110 utilise la méthode de sélection libre pour des terminaux T dont le niveau de batterie est inférieure à un certain seuil (pour peu que lesdits terminaux transmettent au point d'accès AP 110 des messages indiquant lorsque leur batteries respectives passent en dessous d'un seuil prédéterminé), ou dont le temps d'association au sein du réseau de communication sans-fil 120 et le nombre de transmissions ascendantes sont supérieurs à un seuil prédéterminé.

Dans encore un autre mode de réalisation particulier, le point d'accès AP 110 utilise la méthode de sélection aléatoire pour des types de trafics peu prioritaires et la méthode de sélection libre pour des types de trafics plus prioritaires (utilisation de l'indicateur de la QoS par exemple afin de faire la différence entre les trafics).

Dans encore un autre mode de réalisation particulier, le point d'accès AP 110 utilise la méthode de sélection aléatoire pour adresser tous les terminaux T du réseau de communication sans-fil 120 dans un mode de diffusion (« broadcast » en anglais).

Dans encore un autre mode de réalisation particulier, le point d'accès AP 110 utilise la méthode de sélection aléatoire pour des terminaux ne faisant pas partie du réseau de communications sans-fil 120 pour leur donner l'opportunité d'envoyer des messages ne nécessitant pas une appartenance audit réseau de communication sans-fil (de type de demande d'information comme par exemple « Probe Request » ou demande de mesure radio), la méthode de sélection libre restant dédiée aux terminaux T appartenant au réseau de communication sans-fil 120.

Dans un mode de réalisation particulier, le point d'accès AP 110 définit une méthode de sélection spécifique pour chaque terminal T auquel la trame de déclenchement d'accès aléatoire coordonné TF-R est destinée. Cela permet d'enrichir les statistiques, relatives aux sélections libres de ressource fréquentielle, spécifiquement pour certains terminaux T (par exemple, parce que lesdites statistiques sont suffisamment riches pour les autres terminaux T considérés).

Dans une étape 304, le point d'accès AP 110 détermine un ensemble de ressources fréquentielles candidates pour les transmissions ascendantes de type OFDMA pouvant faire suite à la transmission de la trame de déclenchement d'accès aléatoire coordonné TF-R. Ces ressources fréquentielles ne sont pas nécessairement contigües dans le spectre fréquentiel d'utilisation du réseau de communication sans-fil 120. Le point d'accès AP 110 peut utiliser des ensembles prédéfinis de ressources fréquentielles candidates et sélectionner un ensemble parmi lesdits ensembles prédéfinis de ressources fréquentielles candidates, par exemple selon une règle d'équité d'utilisation de l'ensemble du spectre fréquentiel d'utilisation du réseau de communication sans-fil 120. Le point d'accès AP 110 peut aussi ajuster l'ensemble de ressources fréquentielles candidates à soumettre aux terminaux T pour effectuer lesdites transmissions ascendantes de type OFDMA, en fonction des terminaux T auxquels la trame de déclenchement d'accès aléatoire coordonné TF-R est destinée. Cet aspect est détaillé ci-après en relation avec la Fig. 6.

Dans une étape 305 optionnelle, le point d'accès AP 110 détermine quel schéma de modulation et de codage MCS (« Modulation and Coding Scheme » en anglais) lesdits terminaux T sont supposés utiliser pour les transmissions ascendantes de type OFDMA pouvant faire suite à la transmission de la trame de déclenchement d'accès aléatoire coordonné TF-R.

En variante, le point d'accès AP 110 détermine quel schéma de modulation et de codage MCS le moins robuste est supporté par ledit point d'accès AP 110 pour les transmissions ascendantes de type OFDMA pouvant faire suite à la transmission de la trame de déclenchement d'accès aléatoire coordonné TF-R. Chaque terminal T effectuant une transmission ascendante de type OFDMA en réponse à ladite trame de déclenchement d'accès aléatoire coordonné TF-R est alors autorisé à utiliser un schéma de modulation et de codage MCS au moins aussi robuste que celui déterminé ici par le point d'accès AP 110. Autrement dit, chaque dit terminal T est alors autorisé à choisir un schéma de modulation et de codage MCS (parmi ceux prédéfinis pour le réseau de communication sans-fil 120) dont l'efficacité spectrale (produit de l'ordre de la modulation (nombre de bits par symbole de modulation) et du rendement de codage de code correcteur (ratio de nombre de bits utiles sur nombre de bits au total)) est inférieure ou égale à l'efficacité spectrale du schéma de modulation et de codage MCS le moins robuste supporté par ledit point d'accès AP 110 pour les transmissions ascendantes de type OFDMA pouvant faire suite à ladite trame de déclenchement d'accès aléatoire coordonné TF-R.

Dans une autre variante, le point d'accès AP 110 détermine quelle modulation lesdits terminaux T sont supposés utiliser pour les transmissions ascendantes de type OFDMA en réponse à la transmission de la trame de déclenchement d'accès aléatoire coordonné TF-R, et laisse le choix du rendement de codage de code correcteur auxdits terminaux T. Le point d'accès AP 110 n'a alors qu'à adapter son étage de décodage au rendement du code correcteur d'erreur ; la variabilité dans le codage correcteur d'erreur étant obtenue grâce à du poinçonnage, cela est plus simple à réaliser en pratique que des changements de modulation, notamment pour des codes convolutifs et de type LDPC (« Low Density Parity Check » en anglais).

Les schémas de modulation et de codage MCS sont typiquement représentés des index d'une table listant tous les schémas de modulation et de codage MCS utilisables dans le cadre des communications au sein du réseau de communication sans-fil 120. Chaque schéma de modulation et de codage MCS définit une modulation, e.g. BPSK (« Binary Phase Shit Keying » en anglais) ou QPSK (« Quadrature Phase Shift Keying » en anglais) ou QAM (« Quadrature Amplitude Modulation » en anglais), ainsi qu'un rendement de codage de code correcteur d'erreur, *e.g.* 1/3 ou 1/2 ou 2/3, utilisés pour effectuer la transmission en question. Plus le rendement de codage de code correcteur d'erreur et l'ordre de la modulation sont élevés, plus la quantité d'information utile transmise (proportionnelle au produit des deux précédentes quantités) est élevée. Selon le standard IEEE 802.1 1ax, le schéma de modulation et de codage MCS est représenté par index pouvant varier de 0 (BPSK, rendement 1/2) à 11 (1024-QAM, rendement 5/6). De manière générale, plus l'index représentant le schéma de modulation et de codage MCS est élevé, plus la quantité d'information utile transmise est importante. En revanche, plus l'index représentant le schéma de modulation et de codage MCS est élevé, moins le schéma de modulation et de codage MCS est robuste.

Dans un mode de réalisation particulier, plutôt que de déterminer un unique schéma de modulation et de codage MCS pour l'ensemble des ressources fréquentielles candidates déterminées à l'étape 304, le point d'accès AP 110 détermine un schéma de modulation et de codage MCS spécifique pour chaque ressource fréquentielle candidate déterminée à l'étape 304.

Dans une étape 306, le point d'accès AP 110 détermine quelle puissance de transmission descendante va être utilisée par ledit point d'accès 110 pour transmettre la trame de déclenchement d'accès aléatoire coordonné TF-R. Cette puissance de transmission peut être définie par défaut. Cette puissance de transmission peut aussi être ajustée par le point d'accès AP 110, en fonction de critères qui lui sont propres, par exemple pour ne pas excéder une certaine portée de signal radio. Ce qui importe est d'assurer que chaque terminal T recevant la trame de déclenchement d'accès aléatoire coordonné TF-R et qui lui est destinée peut déterminer, en fonction d'une puissance de signal reçu en réception de ladite trame de déclenchement d'accès aléatoire coordonné TF-R, un niveau d'atténuation de signal induit par la transmission depuis le point d'accès AP 110 jusqu'audit terminal T. La puissance d'émission utilisée par le point d'accès AP 110 peut ainsi être prédéfinie (potentiellement diffusée dans des balises transmises par le point d'accès AP 110) et connue des terminaux T connectés au réseau de communication sans-fil 120, plutôt que d'être transmise dans la trame de déclenchement d'accès aléatoire coordonné TF-R elle-même.

La puissance de transmission descendante peut ainsi être définie pour l'ensemble des ressources fréquentielles sur lesquelles ladite trame de déclenchement d'accès aléatoire coordonné TF-R va être transmise. En variante, la puissance de transmission descendante est ainsi définie pour chacune des ressources fréquentielles sur lesquelles ladite trame de déclenchement d'accès aléatoire coordonné TF-R va être transmise, si la puissance n'est pas répartie uniformément sur toutes les sous-porteuses. Dans une autre variante, la puissance de transmission descendante est ainsi définie pour une seule ressource fréquentielle : cette puissance de transmission descendante est alors valable pour chacune desdites ressources fréquentielles lorsque lesdites ressources fréquentielles sont de tailles identiques, ou un facteur d'échelle prédéfini permet de dériver la puissance de transmission descendante pour chacune desdites ressources fréquentielles lorsque lesdites ressources fréquentielles sont de tailles différentes les unes par rapport aux autres.

Dans une étape 307 optionnelle, le point d'accès AP 110 détermine une puissance de réception attendue pour les transmissions ascendantes de type OFDMA pouvant faire suite à la transmission de la trame de déclenchement d'accès aléatoire coordonné TF-R. Cela va permettre à chaque terminal T recevant la trame de déclenchement d'accès aléatoire coordonné TF-R lorsque ladite trame lui est destinée, de déterminer, grâce à la connaissance du niveau d'atténuation de signal induit par la transmission depuis le point d'accès 110 jusqu'audit terminal T et grâce au principe de réciprocité de canal radio, quelle puissance de transmission utiliser pour effectuer une transmission ascendante de type OFDMA dans le cadre de l'accès aléatoire coordonné. Ce qui importe est d'assurer que chaque terminal T ayant à effectuer une transmission ascendante de type OFDMA dans le cadre de l'accès aléatoire coordonné puisse déterminer quelle puissance de transmission utiliser. La puissance de réception minimum souhaitée par le point d'accès AP 110 peut ainsi être prédéfinie (potentiellement diffusée dans des balises émises par le point d'accès AP 110) et connue des terminaux mobiles T connectés au réseau de communication sans-fil 120, plutôt que d'être transmise dans la trame de déclenchement d'accès aléatoire coordonné TF-R elle-même.

La puissance de réception attendue peut ainsi être définie pour une seule ressource fréquentielle candidate : cette puissance de réception attendue est alors valable pour chacune desdites ressources fréquentielles candidates lorsque lesdites ressources fréquentielles candidates sont de tailles identiques, ou un facteur d'échelle prédéfini permet de dériver la puissance de réception attendue pour chacune desdites ressources fréquentielles candidates lorsque lesdites ressources fréquentielles sont de tailles différentes les unes par rapport aux autres. En variante, la puissance de réception attendue est ainsi définie pour chacune desdites ressources fréquentielles candidates.

Dans une étape 308, le point d'accès AP 110 construit la trame de déclenchement d'accès aléatoire coordonné TF-R.

Le point d'accès AP 110 y inclut des informations d'identification de chaque terminal T révélé par l'étape 302, ainsi que des informations d'identification des ressources fréquentielles candidates révélées par l'étape 304.

Le point d'accès AP 110 y inclus en outre une information d'identification de la méthode de sélection de ressource fréquentielle, qui est à appliquer par les terminaux T auxquels la trame de déclenchement d'accès aléatoire coordonné TF-R est destinée, telle que déterminée à l'étape 303.

Si la puissance de transmission qui va être utilisée par le point d'accès AP 110 pour transmettre la trame de déclenchement d'accès aléatoire coordonné TF-R n'est pas d'ores et déjà connue desdits terminaux T, le point d'accès AP 110 inclut en outre dans ladite trame de déclenchement d'accès aléatoire coordonné TF-R des informations représentatives de la puissance de transmission qui va être utilisée par le point d'accès AP 110, comme déjà abordé en relation avec l'étape 306.

Si la puissance minimum attendue par le point d'accès AP 110 en réception de chaque transmission ascendante de type OFMDA faisant suite à ladite trame de déclenchement d'accès aléatoire coordonné TF-R n'est pas d'ores et déjà connue desdits terminaux T, le point d'accès AP 110 inclut en outre dans ladite trame de déclenchement d'accès aléatoire coordonné TF-R des informations représentatives de la puissance minimum attendue en réception de chaque dite transmission ascendante de type OFDMA, comme déjà abordé en relation avec l'étape 307. Le point d'accès AP 110 peut en variante inclure des informations représentatives d'un intervalle de puissance attendue en réception, soit en incluant des informations représentatives des bornes dudit intervalle, soit une information représentative d'une marge autour d'un point milieu dudit intervalle, ou toute autre manière de représenter ledit intervalle.

Dans un mode de réalisation particulier, le point d'accès AP 110 indique en outre dans ladite trame de déclenchement d'accès aléatoire coordonné TF-R quelle est la durée d'autorisation d'accès aléatoire coordonné pour les transmissions ascendantes de type OFDMA faisant suite à la réception de ladite trame de déclenchement d'accès aléatoire coordonné TF-R. En variante, cette durée peut être fixe et d'ores et déjà connue de chacun des dispositifs connectés au réseau de communication sans-fil 120.

Dans un mode de réalisation particulier, le point d'accès AP 110 inclut en outre dans ladite trame de déclenchement d'accès aléatoire coordonné TF-R une information représentative d'un instant à partir duquel sont autorisées à débuter les transmissions ascendantes de type OFDMA faisant suite à ladite trame de déclenchement d'accès aléatoire coordonné TF-R. En variante, ces transmissions ascendantes de type OFDMA sont autorisées à débuter après une durée fixe, et d'ores et déjà connue de chacun des dispositifs connectés au réseau de communication sans-fil 120, à compter de la réception de ladite trame de déclenchement d'accès aléatoire coordonné TF-R.

Dans un mode de réalisation particulier, le point d'accès AP 110 indique en outre dans ladite trame de déclenchement d'accès aléatoire coordonné TF-R si le point d'accès AP 110 autorise une fragmentation de message dans les transmissions ascendantes de type OFDMA en réponse à ladite trame de déclenchement d'accès aléatoire coordonné TF-R. En effet, il est possible qu'un terminal T ne dispose pas d'assez de ressources radio (en fonction des ressources fréquentielles sélectionnées, du schéma de modulation et de codage MCS et de la durée de l'opportunité de transmission) pour transmettre un message en intégralité et doive diviser ce dernier en plusieurs fragments au niveau de la couche MAC (« Medium Access Control » en anglais), afin d'envoyer ledit message par morceaux. La famille de standards IEEE 802.11 prévoit un champ d'un bit, appelé « More Data », qui prend la valeur « 1 » sauf pour le dernier fragment de message pour lequel ce bit prend la valeur « 0 ». En cas de fragmentation, le point d'accès AP 110 est chargé de réassembler le message original non fragmenté, ce qui nécessite que le point d'accès AP 110 dispose de ressources mémoire suffisantes pour ce faire. En variante, le point d'accès AP 110 indique en outre dans ladite trame de déclenchement d'accès aléatoire coordonné TF-R, pour chaque terminal mobile T concerné, si le point d'accès AP 110 autorise une fragmentation de message dans la transmission ascendante de type OFDMA qui pourrait avoir lieu en réponse à ladite trame de déclenchement d'accès aléatoire coordonné TF-R. En effet, une négociation préalable entre tout terminal T et le point d'accès AP 110 peut permettre d'avoir des traitements différents selon les terminaux considérés (par exemple, selon la taille maximale des messages à transmettre ou selon les ressources mémoire encore disponibles au sein du point d'accès AP 110).

Dans une étape 308, le point d'accès AP 110 transmet la trame de déclenchement d'accès aléatoire coordonné TF-R construite à l'étape 307. La trame de déclenchement d'accès aléatoire coordonné TF-R est de niveau « 2 » (couche liaison) dans le modèle OSI (« Open Systems Interconnection » en anglais). La transmission de la trame est préférentiellement de type OFDM. Si le point d'accès AP 110 n'a pas précisé dans la trame de déclenchement d'accès aléatoire coordonné TF-R construite à l'étape 307 avec quelle puissance ladite trame de déclenchement d'accès aléatoire coordonné TF-R est transmise, le point d'accès AP 110 utilise une puissance de transmission par défaut connue des terminaux T ; sinon, le point d'accès AP 110 utilise la puissance de transmission indiquée dans ladite trame de déclenchement d'accès aléatoire coordonné TF-R. Il est alors mis fin à l'algorithme de la Fig. 3.

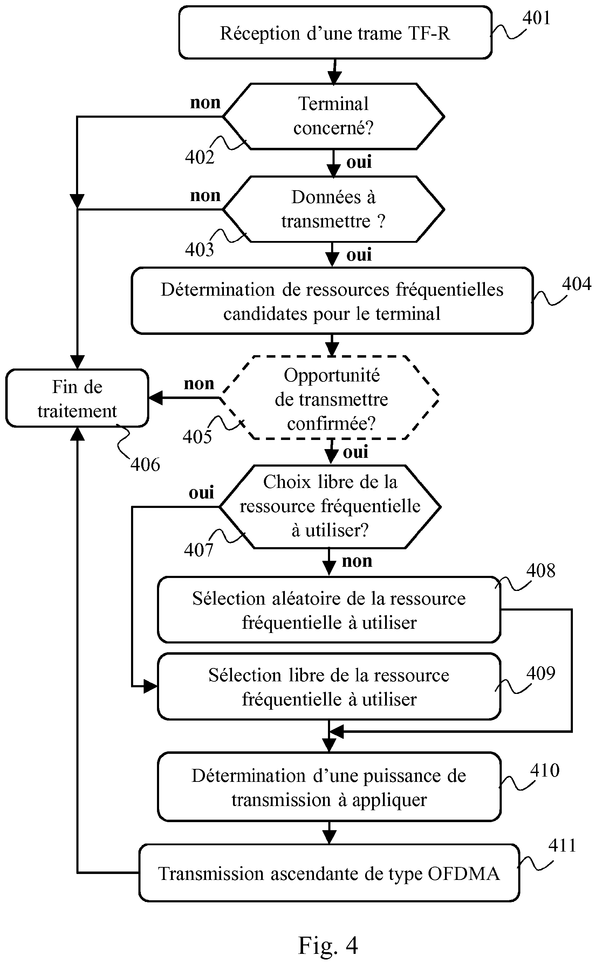

Dans un mode de réalisation particulier, le point d'accès AP 110 transmet la trame de déclenchement d'accès aléatoire coordonné TF-R via au moins les ressources fréquentielles déterminées à l'étape 304, *i.e.* les ressources fréquentielles candidates pour les transmissions ascendantes de type OFDMA susceptibles de faire suite à ladite trame de déclenchement d'accès aléatoire coordonné TF-R. Cela signifie que la transmission de la trame de déclenchement d'accès aléatoire coordonné TF-R entraîne une présence de signal, au niveau de la couche « 1 » (couche physique) du modèle OSI, sur ces ressources fréquentielles grâce au préambule de couche physique de ladite trame et/ou à l'encodage des données de couche liaison de ladite trame. Cela permet aux terminaux T auxquels ladite trame de déclenchement d'accès aléatoire coordonné TF-R est destinée d'évaluer, en ayant connaissance de la puissance de transmission utilisée par le point d'accès AP 110 et en s'appuyant sur le principe de réciprocité de canal, l'atténuation effectivement subie sur chacune desdites ressources fréquentielles. Cet aspect est détaillé ci-après en relation avec la Fig. 4.

Comme c'est le cas dans le standard IEEE 802.11ax, le préambule de couche physique contient typiquement une première sous-partie, que l'on peut noter SubCh, encodée sur chaque canal de 20 MHz (canal unitaire dans la famille de standards IEEE 802.11) par soucis de rétrocompatibilité (*e.g.* SubCh inclut les signaux physiques tels que L-SIG selon le standard IEEE 802.11ac pour la rétrocompatibilité avec les terminaux compatibles avec le standard IEEE 802.11 a/n), et une seconde partie, que l'on peut noter Ch, encodée sur l'ensemble des canaux mis à disposition (*e.g.* Ch inclut les signaux physiques tels que VHT-SIG-A selon le standard IEEE 802.11ac). La trame de déclenchement d'accès aléatoire coordonné TF-R (couche liaison) peut être encodée sur l'ensemble des canaux mis à disposition ou seulement sur ceux comportant des ressources fréquentielles candidates. Dans le cas où les ressources fréquentielles candidates sont réparties sur plusieurs canaux distincts, la trame de déclenchement d'accès aléatoire coordonné TF-R (couche liaison) peut être répétée sur chaque canal de 20MHz. En variante, la trame de déclenchement d'accès aléatoire coordonné TF-R (couche liaison) peut être encodée différemment par canal ou groupe de canaux, en indiquant sur chaque canal de 20 MHz ou groupe de canaux de 20 MHz les données relatives aux ressources fréquentielles candidates appartenant audit canal ou groupe de canaux. Dans une autre variante, la trame de déclenchement d'accès aléatoire coordonné TF-R (couche liaison) peut être concaténée avec une ou plusieurs autres trames MAC (« Medium Access Control » en anglais), en suivant des règles d'encodage par canal desdites autres trames MAC, tant que tout ou partie du préambule de couche physique et/ou des données de couche liaison est présent sur lesdites ressources fréquentielles candidates.

La transmission de cette trame de déclenchement d'accès aléatoire coordonné TF-R donne l'opportunité à chaque terminal T identifié dans ladite trame de déclenchement d'accès aléatoire coordonné TF-R d'effectuer en réponse une transmission ascendante de type OFDMA, tel que décrit ci-après en relation avec la Fig. 4.

La **Fig. 4** illustre schématiquement un algorithme, exécuté par au moins un terminal T du système de communication sans-fil 120, pour bénéficier de la procédure d'accès aléatoire coordonné initiée par le point d'accès AP 110. Considérons à titre illustratif que l'algorithme de la Fig. 4 est exécuté par le terminal mobile T 111.

Dans une étape 401, le terminal mobile T 111 reçoit la trame de déclenchement d'accès aléatoire coordonné TF-R transmise par le point d'accès AP 110 à l'étape 308.

Dans une étape 402, le terminal T 111 vérifie si ledit terminal T 111 est identifié dans la trame de déclenchement d'accès aléatoire coordonné TF-R comme pouvant bénéficier de la procédure d'accès aléatoire coordonné initiée par ladite trame de déclenchement d'accès aléatoire coordonné TF-R. Si tel est le cas, une étape 403 est effectuée ; sinon, une étape 406 est effectuée, dans laquelle le terminal mobile T 111 jette ladite trame de déclenchement d'accès aléatoire coordonné TF-R, et dans laquelle il est mis fin à l'algorithme de la Fig. 4.

Dans l'étape 403, le terminal T 111 vérifie si ledit terminal T 111 a des données à transmettre dans le cadre de la procédure d'accès aléatoire coordonné initiée par ladite trame de déclenchement d'accès aléatoire coordonné TF-R. Si tel est le cas, une étape 404 est effectuée ; sinon, l'étape 406 est effectuée.

Dans l'étape 404, le terminal T 111 identifie quelles sont les ressources fréquentielles candidates, telles qu'indiquées dans ladite trame de déclenchement d'accès aléatoire coordonné TF-R, que ledit terminal T 111 est en droit d'utiliser pour effectuer une transmission ascendante de type OFDMA en réponse à ladite trame de déclenchement d'accès aléatoire coordonné TF-R.

Dans une étape optionnelle 405, le terminal mobile T 111 vérifie si l'opportunité d'effectuer une transmission ascendante de type OFDMA en réponse à ladite trame de déclenchement d'accès aléatoire coordonné TF-R est confirmée. L'étape 405 est implémentée lorsque les terminaux T du réseau de communication sans-fil 120 utilisent chacun un mécanisme, tel que le compteur OBO (pour rappel, « OFDMA Back-Off » en anglais) dans le standard IEEE 802.11 ax qui est manipulé à chaque réception de trame de déclenchement d'accès aléatoire coordonné TF-R, permettant de répartir de manière équitable (« fairly » en anglais) et distribuée (« distributed » en anglais) les accès au medium entre les terminaux T sur plusieurs procédures d'accès aléatoire coordonné successives. Lorsque l'équité (« fairness » en anglais) d'accès au medium est gérée de manière centralisée par le point d'accès AP 110, il est considéré que, lorsqu'un terminal T est identifié dans une trame de déclenchement d'accès aléatoire coordonné TF-R, ledit terminal T est en droit d'accéder au medium en réponse à ladite trame de déclenchement d'accès aléatoire coordonné TF-R.

Si l'opportunité d'effectuer une transmission ascendante de type OFDMA en réponse à ladite trame de déclenchement d'accès aléatoire coordonné TF-R est confirmée, une étape 407 est effectuée ; sinon, l'étape 406 est effectuée.

Dans l'étape 407, le terminal T 111 identifie la méthode de sélection de ressource fréquentielle, que le terminal T 111 doit appliquer pour accéder au medium dans le cadre de la procédure d'accès aléatoire coordonné, telle qu'indiquée par le point d'accès AP 110 dans la trame de déclenchement d'accès aléatoire coordonné TF-R. En d'autres termes, le terminal T 111 vérifie si ledit terminal T 111 a libre choix de ladite ressource fréquentielle parmi les ressources fréquentielles candidates qui lui sont soumises par ledit point d'accès AP 110 ou si ledit terminal T 111 doit sélectionner ladite ressource fréquentielle de manière aléatoire parmi lesdites ressources fréquentielles candidates. Si le choix de ladite ressource fréquentielle est laissé libre au terminal T 111 par le point d'accès AP 110, une étape 409 est effectuée ; sinon, une étape 408 est effectuée.

Dans l'étape 408, le terminal T 111 effectue une sélection aléatoire de la ressource fréquentielle, à utiliser par ledit terminal T 111 pour accéder au medium dans le cadre de la procédure d'accès aléatoire coordonné, parmi les ressources fréquentielles candidates qui lui sont soumises par ledit point d'accès AP 110. Puis, une étape 410 est effectuée.

Dans l'étape 409, le terminal T 111 effectue une sélection libre de la ressource fréquentielle, à utiliser par ledit terminal T 111 pour accéder au medium dans le cadre de la procédure d'accès aléatoire coordonné, parmi les ressources fréquentielles candidates qui lui sont soumises par ledit point d'accès AP 110. Pour ce faire, le terminal T 111 utilise ses propres critères, dont le point d'accès AP 110 n'a pas nécessairement à avoir connaissance. Le terminal T 111 peut trier et/ou classer les ressources fréquentielles candidates en fonction desdits critères pour faciliter la sélection de ressource fréquentielle. Puis, l'étape 410 est effectuée.

Par exemple, le terminal T 111 utilise comme critère de sélection principal de tenter de satisfaire à la puissance de réception minimum attendue par le point d'accès AP 110, tout en minimisant la puissance de transmission à utiliser pour effectuer la transmission ascendante de type OFDMA. Le terminal 111 peut alors effectuer un classement des ressources fréquentielles candidates en fonction de la puissance de transmission requise afin de satisfaire la puissance de réception minimum attendue par le point d'accès AP 110. Le terminal T 111 sélectionne alors la ressource fréquentielle nécessitant la plus faible puissance, ou effectue un tirage au sort parmi lesdites ressources fréquentielles, en effectuant une pondération de la probabilité de tirage de chaque ressource fréquentielle en fonction de sa place dans le classement (une première ressource fréquentielle candidate étant alors favorisée par rapport à une seconde ressource fréquentielle candidate nécessitant une puissance de transmission plus élevée que ladite première ressource fréquentielle). La détermination dynamique de la puissance de transmission à utiliser pour effectuer la transmission ascendante de type OFDMA est abordée ci-après en relation avec l'étape 410.

Selon un autre exemple, le terminal T 111 utilise comme critère de sélection principal de tenter de ne pas fragmenter un message à transmettre dans le cadre de la procédure d'accès aléatoire coordonné. Le terminal T 111 peut exclure les ressources candidates ne permettant pas une transmission sans fragmentation au vu du ou des schémas de modulation et de codage MCS autorisés par le point d'accès AP 110 vis-à-vis desdites ressources candidates. Le terminal mobile 111 peut alors sélectionner aléatoirement une ressource fréquentielle parmi les ressources fréquentielles candidates restantes, ou effectuer un classement selon un critère secondaire, comme par exemple de tenter de satisfaire à la puissance de réception minimum attendue par le point d'accès AP 110, tout en minimisant la puissance de transmission à utiliser pour effectuer la transmission ascendante de type OFDMA (comme expliqué ci-dessus). Dans un mode de réalisation particulier, lorsqu'aucune ressource fréquentielle candidate ne permet d'effectuer la transmission ascendante de type OFDMA sans fragmenter le message, le terminal mobile T 111 utilise la transmission ascendante de type OFDMA pour transmettre un message au point d'accès AP 110 pour indiquer que le terminal T 111 ne peut pas effectuer la transmission ascendante de type OFDMA sans fragmenter le message, afin que le point d'accès AP 110 puisse proposer d'autres ressources fréquentielles candidates et/ou d'autres schémas de modulation et de codage MCS applicables et/ou autoriser la fragmentation lors de l'émission d'une prochaine trame de déclenchement de la procédure d'accès aléatoire coordonné TF-R concernant le terminal T 111. Ce mode de réalisation particulier est aussi applicable lorsque le point d'accès AP 110 a indiqué ne pas autoriser de fragmentation de message dans les transmissions ascendantes effectuées en réponse à ladite trame de déclenchement d'accès aléatoire coordonné TF-R.

Dans un mode de réalisation particulier dans lequel le compteur OBO susmentionné est utilisé, lorsque le terminal T 111 gagne l'accès au medium (compteur OBO nul) mais qu'aucune ressource fréquentielle candidate ne satisfait les critères de sélection que le terminal T 111 s'est défini, le terminal T 111 peut décider de ne pas effectuer de transmission ascendante de type OFDMA en réponse à ladite trame de déclenchement d'accès aléatoire coordonné TF-R, puis mettre son compteur OBO à la valeur « 1 » afin de gagner nécessairement l'opportunité de transmettre sur réception de la prochaine trame de déclenchement d'accès aléatoire coordonné TF-R qui lui est adressée. Le terminal T 111 peut également décider de choisir de transmettre malgré tout sur une ressource fréquentielle choisie de manière aléatoire, ou sur celle au plus proche de satisfaire ses critères de sélection.

Dans l'étape 410, le terminal T 111 détermine une puissance de transmission à utiliser pour effectuer la transmission ascendante de type OFDMA, via la ressource fréquentielle sélectionnée par le terminal T 111 à l'étape 408 ou à l'étape 409, dans le cadre de la procédure d'accès aléatoire coordonné initiée par ladite trame de déclenchement d'accès aléatoire coordonné TF-R. Le terminal T 111 peut utiliser une valeur de puissance de transmission par défaut.

Dans un mode de réalisation préférentiel, le terminal T 111 ajuste la puissance de transmission, pour effectuer la transmission ascendante de type OFDMA, à la ressource fréquentielle sélectionnée par le terminal T 111 à l'étape 408 ou à l'étape 409, ainsi qu'à la puissance de réception minimum attendue par le point d'accès AP 110. Le terminal T 111 détermine un niveau d'atténuation de signal correspondant à ladite ressource fréquentielle. Le terminal T 111 peut s'appuyer sur le niveau de signal en réception induit par la transmission de ladite trame de déclenchement d'accès aléatoire coordonné TF-R vis-à-vis de ladite ressource fréquentielle, en connaissant la puissance de transmission utilisée par le point d'accès AP 110 pour transmettre ladite trame de déclenchement d'accès aléatoire coordonné TF-R. L'atténuation est alors donnée par la différence entre ladite puissance de transmission utilisée par le point d'accès AP 110 vis-à-vis de ladite ressource fréquentielle et ledit niveau de signal en réception (en décibels). Ainsi, en connaissant l'atténuation et la puissance de réception minimum attendue par le point d'accès AP 110, le terminal T 111 est capable de déterminer la puissance de transmission à utiliser pour effectuer la transmission ascendante de type OFDMA. La puissance de transmission à utiliser pour effectuer la transmission ascendante de type OFDMA est alors la puissance de réception minimum attendue par le point d'accès AP 110 plus ladite atténuation, plus éventuellement une marge prédéfinie (en décibels).

Dans une étape 411, le terminal T 111 effectue la transmission ascendante de type OFDMA afin de transmettre au point d'accès AP 110 les données identifiées à l'étape 403, via la ressource fréquentielle sélectionnée par le terminal T 111 à l'étape 408 ou à l'étape 409, en utilisant la puissance de transmission déterminée à l'étape 410. Le terminal T 111 attend typiquement un laps de temps de durée prédéterminée après la réception de ladite trame de déclenchement d'accès aléatoire coordonné TF-R avant de déclencher ladite transmission ascendante de type OFDMA. Dans le cadre du standard IEEE 802.1 1ax, cette durée est définie par un paramètre appelé SIFS (« Short Inter-Frame Spacing » en anglais) et est égale à 16 µs sur la bande radio ISM (« Industrial, Scientific and Médical » en anglais) à 5 GHz par exemple. Une autre durée peut être utilisée, comme par exemple celle définie par un autre paramètre du standard IEEE 802.11 appelé PIFS (« PCF Inter-Frame Spacing » en anglais, où PCF signifie « Point Coordinated Function » en anglais). Puis, l'étape 406 est effectuée.

La **Fig. 5** illustre schématiquement un algorithme, exécuté par le point d'accès AP 110, en réception d'une transmission ascendante de type OFDMA dans le cadre d'une procédure d'accès aléatoire coordonné préalablement initiée par ledit point d'accès AP 110. Considérons à titre illustratif que la procédure d'accès aléatoire coordonné préalablement initiée par ledit point d'accès AP 110 donnait une opportunité au terminal T 111 d'effectuer une transmission ascendante de type OFDMA, et que le terminal T 111 a saisi cette opportunité.

Dans une étape 501, le point d'accès AP 110 reçoit une trame ascendante de type OFDMA transmise par le terminal T 111 en réponse à une trame de déclenchement d'accès aléatoire coordonné TF-R préalablement transmise par le point d'accès AP 110.

Dans une étape 502, le point d'accès AP 110 détermine quelle méthode de sélection de ressource fréquentielle est supposée avoir été appliquée par le terminal T 111, telle qu'indiquée par le point d'accès AP 111 dans la trame de déclenchement d'accès aléatoire coordonné TF-R qui a permis la transmission ascendante de type OFDMA effectuée par le terminal T 111.

Dans une étape 503, le point d'accès AP 110 détermine si la méthode de sélection de ressource fréquentielle supposée avoir été appliquée par le terminal T 111 est la méthode de sélection aléatoire, auquel cas une étape 504 est effectuée, ou la méthode de sélection libre, auquel cas une étape 508 est effectuée.

Dans l'étape 504, le point d'accès AP 110 enrichit des statistiques comportementales relatives audit terminal T 111 vis-à-vis du caractère aléatoire que sont supposées avoir les sélections de ressource fréquentielle effectuées par ledit terminal T 111 au fil du temps lorsque le point d'accès AP 110 demande à ce que soit utilisée la méthode de sélection aléatoire. Par exemple, le point d'accès AP 110 maintient, pour chaque terminal T du réseau de communication sans-fil 120, un premier compteur C1 vis-à-vis de chaque ressource fréquentielle utilisable par les transmissions ascendantes de type OFDMA dans le cadre des procédures d'accès aléatoire coordonné. Le point d'accès AP 110 incrémente d'une unité le premier compteur C1 associé à une ressource fréquentielle lorsque ledit terminal T utilise ladite ressource fréquentielle pour effectuer une transmission ascendante de type OFDMA dans le cadre d'une procédure d'accès aléatoire coordonné basée sur une sélection aléatoire de ressource fréquentielle. Ces statistiques peuvent prendre d'autres formes, comme par exemple un journal horodaté des ressources fréquentielles utilisées lors des procédures d'accès aléatoire coordonné basées sur des sélections aléatoires de ressource fréquentielle.

Dans une étape 505, le point d'accès AP 110 vérifie si le comportement du terminal T 111 est conforme vis-à-vis du caractère aléatoire que sont supposées avoir les sélections de ressource fréquentielle effectuées par ledit terminal T 111 au fil du temps lorsque le point d'accès AP 110 demande à ce que soit utilisée la méthode de sélection aléatoire. En reprenant l'exemple susmentionné des premiers compteurs C1, le point d'accès AP 110 vérifie au fil du temps que les valeurs desdits premiers compteurs C1 associés audit terminal T 111 sont substantiellement homogènes entre elles, *i.e.* que ces valeurs ne présentent que des disparités inférieures à un seuil TH1 donné. Si le comportement du terminal T 111 est conforme, une étape 507 est effectuée, dans laquelle le point d'accès AP 110 traite les données qui ont été transmises par le terminal T 111 dans le cadre de la transmission ascendante de type OFDMA, et il est mis fin à l'algorithme de la Fig. 5 ; sinon, une étape 506 est effectuée.

Dans l'étape 506, le point d'accès AP 110 prend des mesures de répression vis-à-vis du terminal T 111, en considérant que le terminal T 111 utilise un générateur de nombre aléatoire biaisé. Le point d'accès AP 110 peut aussi faire appel à une autorité tierce, en charge de prendre ces mesures de répression ou de dicter au terminal T 111 quelles mesures de répression appliquer. Ces mesures de répression sont par exemple d'interdire ou de limiter les échanges avec le terminal T 111 au sein du réseau de communication sans-fil 120 au moins pour une durée prédéterminée.

L'ensemble des étapes 504, 505 et 506 est optionnel en ce que le point AP 110 peut ne pas vérifier que le caractère aléatoire des sélections effectuées par le terminal mobile 111, lorsque ledit terminal 111 est supposé appliquer la méthode de sélection aléatoire, est effectivement respecté.

Dans l'étape 508, le point d'accès AP 110 enrichit des statistiques relatives audit terminal T 111 vis-à-vis de l'utilisation des ressources fréquentielles utilisables par les transmissions ascendantes dans le cadre des procédures d'accès aléatoire coordonné lorsque le point d'accès AP 110 demande à ce que soit utilisée la méthode de sélection libre. Par exemple, le point d'accès AP 110 maintient, pour chaque terminal T du réseau de communication sans-fil 120, un second compteur C2 vis-à-vis de chaque ressource fréquentielle utilisable par les transmissions ascendantes de type OFDMA dans le cadre des procédures d'accès aléatoire coordonné. Le point d'accès AP 110 incrémente d'une unité le second compteur C2 associé à une ressource fréquentielle lorsque ledit terminal T utilise ladite ressource fréquentielle pour effectuer une transmission ascendante de type OFDMA dans le cadre d'une procédure d'accès aléatoire coordonné basée sur une sélection libre de ressource fréquentielle. Ces statistiques peuvent prendre d'autres formes, comme par exemple un journal horodaté des ressources fréquentielles utilisées lors des procédures d'accès aléatoire coordonné basées sur des sélections libres de ressource fréquentielle.

Comme déjà indiqué, le point d'accès AP 110 n'a pas nécessairement besoin de connaître ce qui motive le terminal T 111 de choisir telle ou telle ressource fréquentielle parmi les ressources fréquentielles candidates que lui propose le point d'accès AP 110 dans les trames de déclenchement de procédure d'accès aléatoire coordonné T-FR. Il est cependant avantageux que le point d'accès AP 110 puisse déterminer, grâce auxdites statistiques, quelle(s) ressource(s) fréquentielle(s) privilégier ultérieurement pour le terminal T 111 dans le cadre des procédures d'accès aléatoire coordonné ultérieures. Ces aspects sont détaillés par la suite en relation avec les Figs. 6 et 7. Ensuite, l'étape 507 est effectuée.

La **Fig. 6** illustre schématiquement un algorithme, exécuté par le point d'accès AP 110, pour sélectionner des ressources fréquentielles candidates à soumettre à un terminal T dans le cadre d'une procédure d'accès aléatoire coordonné. Considérons à titre illustratif que le point d'accès AP 110 considère le terminal 111.

Dans une étape 601, le point d'accès AP 110 obtient des statistiques relatives audit terminal T 111 vis-à-vis de l'utilisation des ressources fréquentielles utilisables par les transmissions ascendantes dans le cadre des procédures d'accès aléatoire coordonné lorsque le point d'accès AP 110 demande à ce que soit utilisée la méthode de sélection libre. Ces statistiques sont celles que le point d'accès AP 110 enrichit dans l'étape 508 à chaque réception de transmission ascendante de type OFDMA pour laquelle le point d'accès AP 110 a demandé audit terminal 111 d'utiliser la méthode de sélection libre dans la trame de déclenchement d'accès aléatoire coordonné TF-R qui a permis ladite transmission ascendante de type OFDMA.

Dans une étape 602, le point d'accès AP 110 détermine si une condition est remplie pour que les statistiques obtenues à l'étape 601 puissent être considérées comme suffisantes. Une telle condition est par exemple qu'un certain laps de temps se soit écoulé depuis le début de collecte desdites statistiques, ou qu'un certain nombre de procédures d'accès aléatoire coordonné aient été initiées depuis le début de collecte desdites statistiques, ou qu'un certain nombre de procédures d'accès aléatoire coordonné aient été initiées et effectivement saisies par le terminal T 111 depuis le début de collecte desdites statistiques. Si les statistiques obtenues à l'étape 601 sont considérées comme suffisantes, une étape 604 est effectuée ; sinon, une étape 603 est effectuée.

Dans l'étape 603, le point d'accès AP 110 utilise une sélection prédéfinie de ressources fréquentielles à soumettre au terminal T 111 dans le cadre de la procédure d'accès aléatoire coordonné considérée. Par exemple, le point d'accès AP 110 change régulièrement de sélection prédéfinie de ressources fréquentielles au fur et à mesure des procédures d'accès aléatoire coordonné, de manière à pouvoir collecter suffisamment de statistiques vis-à-vis du terminal mobile T 111 sur l'intégralité des ressources fréquentielles utilisables par les transmissions ascendantes de type OFDMA dans le cadre des procédures d'accès aléatoire coordonné.

Dans l'étape 604, le point d'accès AP 110 utilise une sélection de ressources fréquentielles à soumettre au terminal T 111 dans le cadre de la procédure d'accès aléatoire coordonné considérée, en s'appuyant sur les statistiques obtenues à l'étape 601. Plus précisément, le point d'accès AP 110 soumet au terminal T 111 au moins la ressource fréquentielle qui est préférée par le terminal T 111 selon lesdites statistiques. Cette approche est particulièrement adaptée à une application de la méthode de sélection libre. En reprenant l'exemple du second compteur C2 introduit en relation avec la Fig. 5, le point d'accès AP 110 sélectionne au moins la ressource fréquentielle pour laquelle la valeur du second compteur C2 est la plus élevée, ou en variante, les N (N > 1) ressources fréquentielles pour lesquelles les valeurs respectives de leurs seconds compteurs C2 sont les plus élevées. Cette dernière approche est adaptée à la fois à une application de la méthode de sélection libre et à une application de la méthode de sélection aléatoire. L'étape 604 peut être effectuée que ce soit pour des procédures d'accès aléatoire coordonné dont la sélection de ressource fréquentielle par le terminal T 111 est aléatoire, ou que ce soit pour des procédures d'accès aléatoire coordonné dont la sélection de ressource fréquentielle par le terminal T 111 est libre.

La **Fig. 7** illustre schématiquement un algorithme, exécuté par le point d'accès AP 110, pour effectuer des groupements de terminaux T dans le cadre de la procédure d'accès aléatoire coordonné. Lorsque le point d'accès AP 110 transmet une trame de déclenchement d'accès aléatoire coordonné TF-R, ladite trame de déclenchement d'accès aléatoire coordonné TF-R est destinée à chaque terminal d'un dit groupement.

Dans une étape 701, le point d'accès AP 110 obtient des statistiques relatives aux terminaux T connectés au réseau de communication sans-fil 120 vis-à-vis de l'utilisation des ressources fréquentielles utilisables par les transmissions ascendantes dans le cadre des procédures d'accès aléatoire coordonné lorsque le point d'accès AP 110 demande à ce que soit utilisée la méthode de sélection libre. Ces statistiques sont celles que le point d'accès AP 110 enrichit dans l'étape 508 à chaque réception de transmission ascendante de type OFDMA pour laquelle le point d'accès AP 110 a demandé d'utiliser la méthode de sélection libre dans la trame de déclenchement d'accès aléatoire coordonné TF-R qui a permis ladite transmission ascendante de type OFDMA.

Dans une étape 702, le point d'accès AP 110 détermine si une condition est remplie pour que les statistiques obtenues à l'étape 701 puissent être considérées comme suffisantes. Une telle condition est par exemple qu'un certain laps de temps se soit écoulé depuis le début de collecte desdites statistiques, ou qu'un certain nombre de procédures d'accès aléatoire coordonné aient été initiées depuis le début de collecte desdites statistiques, ou qu'un certain nombre de procédures d'accès aléatoire coordonné aient été initiées et effectivement saisies par les terminaux depuis le début de collecte desdites statistiques. Si les statistiques obtenues à l'étape 701 sont considérées comme suffisantes, une étape 704 est effectuée ; sinon, une étape 703 est effectuée.

Dans l'étape 703, le point d'accès AP 110 utilise des groupements prédéterminés de terminaux T connectés au réseau de communication sans-fil 120. Ces groupements prédéterminés peuvent être effectués en fonction de types de fonctionnalités respectives implémentées par les terminaux T connectés au réseau de communication sans-fil 120. Par exemple, le point d'accès AP 110 peut effectuer un regroupement de terminaux T générant du trafic lié à l'Internet des Objets IoT. Dans un autre exemple, le point d'accès AP 110 peut effectuer un regroupement de terminaux T générant des trafics ayant des caractéristiques similaires (même périodicité d'émission, même QoS généralement observée dans les messages émis ...). En variante, le point d'accès AP 110 utilise des regroupements aléatoires de terminaux T parmi les terminaux T connectés au réseau de communication sans-fil 120.

Dans l'étape 704, le point d'accès AP 110 effectue des regroupements de terminaux T connectés au réseau de communication sans-fil 120, en s'appuyant sur les statistiques obtenues à l'étape 701. Plus précisément, le point d'accès AP 110 effectue ces regroupements de telle sorte que les terminaux T regroupés ensemble aient des préférences de ressources fréquentielles, à utiliser dans le cadre des transmissions ascendantes de type OFDMA, qui soient si possible distinctes. Une approche similaire est que le point d'accès AP 110 effectue ces regroupements de telle sorte que les terminaux T ayant des préférences de ressources fréquentielles, à utiliser dans le cadre des transmissions ascendantes de type OFDMA, qui sont identiques soient placés dans des regroupements distincts. Cela permet de limiter les occurrences de collision en cas de sélection libre de ressource fréquentielle dans le cadre de la procédure d'accès aléatoire coordonné.

Il peut être considéré que la procédure d'accès aléatoire coordonné décrite précédemment en relation avec les Figs. 1 à 7 est supportée par tous les dispositifs connectés au réseau de communication sans-fil 120. Un apprentissage dynamique de la compatibilité ou non des dispositifs connectés au réseau de communication sans-fil 120 vis-à-vis de la procédure d'accès aléatoire coordonné peut aussi être considéré. De manière à permettre de synchroniser les dispositifs connectés au réseau de communication sans-fil 120, chaque point d'accès d'un réseau de communication sans-fil transmet typiquement des balises (« beacon » en anglais) à intervalles réguliers. Le point d'accès AP 110 peut indiquer dans lesdites balises qu'il est apte à déclencher des procédures d'accès aléatoire coordonné, et optionnellement quelle méthode de sélection (aléatoire, libre) ledit point d'accès AP 110 supporte. Le point d'accès AP 110 peut aussi indiquer, dans ces balises, une information représentative des prochains instants de transmission de trame de déclenchement de procédure d'accès aléatoire coordonné TF-R. Ceci peut être indiqué par exemple par une durée après la réception de la dite balise ou un instant de référence et une périodicité. Le point d'accès AP 110 peut aussi indiquer qu'il est apte à déclencher des procédures d'accès aléatoire coordonné, en réponse à toute requête de sondage (« Probe Requests » en anglais) qui lui est adressée. Chaque terminal T peut aussi indiquer qu'il supporte les procédures d'accès aléatoire coordonné, et optionnellement quelle(s) méthode(s) de sélection (aléatoire, libre) ledit terminal supporte, en insérant une information correspondante dans chaque requête de sondage (« Probe Requests » en anglais) adressée au point d'accès AP 110 ou chaque requête d'association (« Association Requests » en anglais) ou de réassociation (« Reassociation Requests » en anglais) adressée au point d'accès AP 110.

Chaque terminal T peut également avertir le point d'accès AP 110, après association, que ledit terminal T souhaite désormais communiquer de manière privilégiée par le biais de la procédure d'accès aléatoire coordonné : une trame spécifique, appelée *Random Access Only Request*, est alors envoyée par ledit terminal T ; le point d'accès AP 110 confirme réception des instructions dudit terminal T, soit par un acquittement de la trame reçue (sur la base d'une trame *Ack* ou *BlockAck*, telles que définies dans la famille de standard IEEE 802.11), soit par un message dédié, appelé *Random Access Only Response.* Le point d'accès AP 110 a la possibilité de refuser la demande dudit terminal T ou d'en différer la prise en compte, en avertissant préférentiellement ledit terminal T. En cas de confirmation, le point d'accès AP 110 peut également informer ledit terminal T de la fréquence d'occurrence des transmissions des trames de déclenchement de procédure d'accès aléatoire coordonné T-FR. En cas d'absence de réponse, ledit terminal T considère que sa demande n'a pas été prise en compte.

De manière équivalente, chaque terminal T peut également avertir le point d'accès AP 110, après association, que le dit terminal T ne souhaite plus communiquer de manière privilégiée par le biais de la procédure d'accès aléatoire coordonné : une trame spécifique, appelée *Random Access Only Cancel*, est alors envoyée par ledit terminal T ; le point d'accès AP 110 confirme réception des instructions dudit terminal T, soit par un acquittement de la trame reçue (sur la base d'une trame *Ack* ou *BlockAck*, telles que définies dans la famille de standard IEEE 802.11), soit par un message dédié, appelé *Random Access Cancel Confirm.*

Dans la description qui précède en relation avec les Figs. 1 à 7, le point d'accès AP 110 ne se préoccupe pas des critères utilisés par chaque terminal T pour sélectionner librement une ressource fréquentielle, parmi les ressources fréquentielles candidates soumises par le point d'accès AP 110, afin d'effectuer une transmission ascendante de type OFDMA dans le cadre d'une procédure d'accès aléatoire coordonné. Il est toutefois possible que le point d'accès AP 110 impose un critère de choix ou une règle de choix auxdits terminaux T. Le point d'accès AP 110 inclut alors dans la trame de déclenchement de procédure d'accès aléatoire coordonné TF-R en question une information représentative du critère de choix (ou de la règle de choix) imposé par le point d'accès AP 110. Le point d'accès AP 110 peut imposer des critères de choix (ou règles de choix) différents aux terminaux T les uns par rapport aux autres. Par exemple, le point d'accès AP 110 peut demander à un terminal T qui obtiendrait l'opportunité d'accès au medium à la suite de la réception de la trame de déclenchement de procédure d'accès aléatoire coordonné TF-R de privilégier la minimisation de la puissance d'émission dudit terminal dans sa sélection de ressource fréquentielle, et ce afin de limiter les potentielles interférences envers d'autres réseaux de communication sans fil.

## Revendications

1. Procédé implémenté par un point d'accès (AP 110) d'un réseau de communication sans-fil (120) auquel est connectée une pluralité de terminaux (T 111, 112, 113), le point d'accès transmettant dans le réseau de communication sans-fil des trames de déclenchement de procédure d'accès aléatoire coordonné, chaque trame de déclenchement de procédure d'accès aléatoire coordonné offrant une opportunité d'accès au medium dudit réseau de communication sans-fil à chaque terminal auquel ladite trame est destinée, chaque terminal qui saisit ladite opportunité d'accès au medium effectuant une transmission ascendante de type OFDMA vers ledit point d'accès en réponse à ladite trame,
**caractérisé en ce que** le point d'accès inclut (303, 308) dans chaque trame de déclenchement de procédure d'accès aléatoire coordonné des informations représentatives d'une méthode de sélection de ressource fréquentielle, choisie par ledit point d'accès selon une politique prédéfinie, parmi les deux suivantes :
- une méthode de sélection aléatoire, selon laquelle chaque terminal concerné est supposé sélectionner aléatoirement une ressource fréquentielle parmi un ensemble de ressources fréquentielles candidates soumises (304, 308) par ledit point d'accès dans ladite trame de déclenchement de procédure d'accès aléatoire coordonné ; et
- une méthode de sélection libre, selon laquelle chaque terminal concerné est supposé sélectionner librement une ressource fréquentielle parmi un ensemble de ressources fréquentielles candidates soumises (304, 308) par ledit point d'accès dans ladite trame de déclenchement de procédure d'accès aléatoire coordonné.

2. Procédé selon la revendication 1, dans lequel le point d'accès inclut en outre (306, 308) dans chaque trame de déclenchement de procédure d'accès aléatoire coordonné des informations représentatives d'une puissance de transmission de ladite trame par ledit point d'accès.

3. Procédé selon l'une quelconque des revendications 1 et 2, dans lequel le point d'accès inclut en outre (307, 308) dans chaque trame de déclenchement de procédure d'accès aléatoire coordonné des informations représentatives d'une puissance de réception attendue par ledit point d'accès en réception de chaque transmission ascendante de type OFDMA effectuée en réponse à ladite trame.

4. Procédé selon l'une quelconque des revendications 1 à 3, dans lequel le point d'accès transmet (309) chaque trame de déclenchement de procédure d'accès aléatoire coordonné au moins via les ressources fréquentielles candidates soumises dans ladite trame et parmi lesquelles les terminaux auxquels ladite trame est destinée sont supposés effectuer la sélection de ressource fréquentielle pour effectuer les transmissions ascendantes de type OFDMA en réponse à ladite trame.

5. Procédé selon l'une quelconque des revendications 1 à 4, dans lequel le point d'accès inclut en outre (305, 308) dans chaque trame de déclenchement de procédure d'accès aléatoire coordonné des informations représentatives du schéma de modulation et de codage le moins robuste autorisé par ledit point d'accès pour effectuer chaque transmission ascendante de type OFDMA en réponse à ladite trame.

6. Procédé selon l'une quelconque des revendications 1 à 5, dans lequel le point d'accès collecte (508) des premières statistiques relatives aux ressources sélectionnées par lesdits terminaux pour effectuer les transmissions ascendantes de type OFDMA en réponse aux trames de déclenchement de procédure d'accès aléatoire coordonné qui incluent des informations représentatives de la méthode de sélection libre.

7. Procédé selon la revendication 6, dans lequel le point d'accès détermine (603) les ressources fréquentielles candidates soumises dans chaque trame de déclenchement de procédure d'accès aléatoire coordonné, en fonction desdites premières statistiques collectées vis-à-vis des terminaux auxquels ladite trame de déclenchement de procédure d'accès aléatoire coordonné est destinée.

8. Procédé selon l'une quelconque des revendications 6 et 7, dans lequel le point d'accès effectue (703) un regroupement de terminaux auquel une trame de déclenchement de procédure d'accès aléatoire coordonné est destinée, en fonction desdites premières statistiques collectées vis-à-vis des terminaux connectés au réseau de communication sans-fil.

9. Procédé selon l'une quelconque des revendications 1 à 8, dans lequel le point d'accès collecte (504) des secondes statistiques relatives aux ressources sélectionnées par lesdits terminaux pour effectuer les transmissions ascendantes de type OFDMA en réponse aux trames de déclenchement de procédure d'accès aléatoire coordonné qui incluent des informations représentatives de la méthode de sélection aléatoire.

10. Procédé selon la revendication 9, dans lequel le point d'accès vérifie (505) que les sélections de ressource fréquentielle pour effectuer les transmissions ascendantes de type OFDMA en réponse aux trames de déclenchement de procédure d'accès aléatoire coordonné qui incluent des informations représentatives de la méthode de sélection aléatoire présentent effectivement un caractère aléatoire.

11. Procédé selon l'une quelconque des revendications 1 à 10, dans lequel le point d'accès inclut (308) en outre, dans chaque trame de déclenchement de procédure d'accès aléatoire coordonné pour laquelle le point d'accès a choisi la méthode de sélection libre, des informations représentatives d'une règle de sélection, parmi un ensemble prédéfini de règles de sélection, que chaque terminal concerné est supposé appliquer pour sélectionner librement une dite ressource fréquentielle parmi l'ensemble de ressources fréquentielles candidates soumises par ledit point d'accès dans ladite trame de déclenchement de procédure d'accès aléatoire coordonné.

12. Procédé selon l'une quelconque des revendications 1 à 11, dans lequel le point d'accès indique, dans des balises envoyées par le point d'accès pour synchroniser le réseau de communication sans-fil, que le point d'accès est apte à déclencher des procédures d'accès aléatoire coordonné.

13. Procédé selon la revendication 12, dans lequel le point d'accès indique, dans les balises envoyées par le point d'accès pour synchroniser le réseau de communication sans-fil, une information représentative de prochains instants de transmission de trame de déclenchement de procédure d'accès aléatoire coordonné.

14. Medium de stockage d'informations, dans lequel est stocké un programme d'ordinateur comprenant des instructions pour implémenter, par un processeur d'un point d'accès d'un réseau de communication sans-fil, le procédé selon l'une quelconque des revendications 1 à 13, lorsque ledit programme est exécuté par ledit processeur.

15. Point d'accès (AP 110) destiné à gérer un réseau de communication sans-fil (120) auquel est connectée une pluralité de terminaux (T 111, 112, 113), le point d'accès étant configuré pour transmettre dans le réseau de communication sans-fil des trames de déclenchement de procédure d'accès aléatoire coordonné, chaque trame de déclenchement de procédure d'accès aléatoire coordonné offrant une opportunité d'accès au medium dudit réseau de communication sans-fil à chaque terminal auquel ladite trame est destinée, chaque terminal qui saisit ladite opportunité d'accès au medium effectuant une transmission ascendante de type OFDMA vers ledit point d'accès en réponse à ladite trame,
**caractérisé en ce que** le point d'accès est configuré pour inclure (303, 308) dans chaque trame de déclenchement de procédure d'accès aléatoire coordonné des informations représentatives d'une méthode de sélection de ressource fréquentielle, choisie par ledit point d'accès selon une politique prédéfinie, parmi les deux suivantes :
- une méthode de sélection aléatoire, selon laquelle chaque terminal concerné est supposé sélectionner aléatoirement une ressource fréquentielle parmi un ensemble de ressources fréquentielles candidates soumises (304, 308) par ledit point d'accès dans ladite trame de déclenchement de procédure d'accès aléatoire coordonné ; et
- une méthode de sélection libre, selon laquelle chaque terminal concerné est supposé sélectionner librement une ressource fréquentielle parmi un ensemble de ressources fréquentielles candidates soumises (304, 308) par ledit point d'accès dans ladite trame de déclenchement de procédure d'accès aléatoire coordonné.

## Patentansprüche

1. Verfahren, das von einem Zugangspunkt (AP 110) eines Drahtloskommunikationsnetzes (120) implementiert wird, mit dem eine Mehrzahl von Endgeräten (T 111, 112, 113) verbunden ist, wobei der Zugangspunkt im Drahtloskommunikationsnetz Rahmen zur Auslösung eines Verfahrens für koordinierten Direktzugriff überträgt, wobei jeder Rahmen zur Auslösung eines Verfahrens für koordinierten Direktzugriff jedem Endgerät, an welches der Rahmen gerichtet ist, eine Möglichkeit zum Zugriff auf das Medium des Drahtloskommunikationsnetzes bietet, wobei jedes Endgerät, das die Möglichkeit zum Zugriff auf das Medium nutzt, in Reaktion auf den Rahmen eine Aufwärts-OFDMA-Übertragung zum Zugangspunkt durchführt,
**dadurch gekennzeichnet, dass** der Zugangspunkt (303, 308) in jeden Rahmen zur Auslösung eines Verfahrens für koordinierten Direktzugriff Informationen einfügt, die für ein Frequenzressourcen-Auswahlverfahren repräsentativ sind, das von dem Zugangspunkt nach einer vorgegebenen Richtlinie aus den beiden folgenden ausgewählt wird:
- einem Zufallsauswahlverfahren, bei dem jedes betroffene Endgerät eine Frequenzressource aus einer Menge von Kandidaten-Frequenzressourcen, die vom Zugangspunkt in dem Rahmen zur Auslösung eines Verfahrens für koordinierten Direktzugriff unterbreitet werden (304, 308), zufällig auswählen soll; und
- einem freien Auswahlverfahren, bei dem jedes betroffene Endgerät eine Frequenzressource aus einer Menge von Kandidaten-Frequenzressourcen, die vom Zugangspunkt in dem Rahmen zur Auslösung eines Verfahrens für koordinierten Direktzugriff unterbreitet werden (304, 308), frei auswählen soll.

2. Verfahren nach Anspruch 1, wobei der Zugangspunkt ferner in jeden Rahmen zur Auslösung eines Verfahrens für koordinierten Direktzugriff Informationen einfügt (306, 308), die für eine Leistung einer Übertragung des Rahmens durch den Zugangspunkt repräsentativ sind.

3. Verfahren nach einem der Ansprüche 1 und 2, wobei der Zugangspunkt ferner in jeden Rahmen zur Auslösung eines Verfahrens für koordinierten Direktzugriff Informationen einfügt (307, 308), die für eine Empfangsleistung repräsentativ sind, die vom Zugangspunkt beim Empfang jeder Aufwärts-OFDMA-Übertragung, die in Reaktion auf den Rahmen durchgeführt wird, erwartet wird.

4. Verfahren nach einem der Ansprüche 1 bis 3, wobei der Zugangspunkt jeden Rahmen zur Auslösung eines Verfahrens für koordinierten Direktzugriff wenigstens über die Kandidaten-Frequenzressourcen überträgt (309), die in dem Rahmen unterbreitet werden, und aus denen die Endgeräte, an die der Rahmen gerichtet ist, die Frequenzressourcen-Auswahl durchführen sollen, um die Aufwärts-OFDMA-Übertragungen in Reaktion auf den Rahmen durchzuführen.

5. Verfahren nach einem der Ansprüche 1 bis 4, wobei der Zugangspunkt ferner in jeden Rahmen zur Auslösung eines Verfahrens für koordinierten Direktzugriff Informationen einfügt (305, 308), die für das am wenigsten robuste Modulations- und Codierungsschema repräsentativ sind, das vom Zugangspunkt zugelassen ist, um jede Aufwärts-OFDMA-Übertragung in Reaktion auf den Rahmen durchzuführen.

6. Verfahren nach einem der Ansprüche 1 bis 5, wobei der Zugangspunkt erste Statistiken bezogen auf die Ressourcen sammelt (508), die von den Endgeräten auswählt sind, um die Aufwärts-OFDMA-Übertragungen in Reaktion auf die Rahmen zur Auslösung eines Verfahrens für koordinierten Direktzugriff durchzuführen, die Informationen enthalten, die für das freie Auswahlverfahren repräsentativ sind.

7. Verfahren nach Anspruch 6, wobei der Zugangspunkt die Kandidaten-Frequenzressourcen, die in jedem Rahmen zur Auslösung eines Verfahrens für koordinierten Direktzugriff unterbreitet werden, in Abhängigkeit von den ersten Statistiken bestimmt (603), die gegenüber den Endgeräten gesammelt werden, an die der Rahmen zur Auslösung eines Verfahrens für koordinierten Direktzugriff gerichtet ist.

8. Verfahren nach einem der Ansprüche 6 und 7, wobei der Zugangspunkt eine Gruppierung von Endgeräten, an die ein Rahmen zur Auslösung eines Verfahrens für koordinierten Direktzugriff gerichtet ist, in Abhängigkeit von den ersten Statistiken durchführt (703), die gegenüber den Endgeräten gesammelt werden, die mit dem Drahtloskommunikationsnetz verbunden sind.

9. Verfahren nach einem der Ansprüche 1 bis 8, wobei der Zugangspunkt zweite Statistiken bezogen auf die Ressourcen sammelt (504), die von den Endgeräten auswählt sind, um die Aufwärts-OFDMA-Übertragungen in Reaktion auf die Rahmen zur Auslösung eines Verfahrens für koordinierten Direktzugriff durchzuführen, die Informationen enthalten, die für das Zufallsauswahlverfahren repräsentativ sind.

10. Verfahren nach Anspruch 9, wobei der Zugangspunkt überprüft (505), dass die Frequenzressourcen-Auswahlen zur Durchführung der Aufwärts-OFDMA-Übertragungen in Reaktion auf die Rahmen zur Auslösung eines Verfahrens für koordinierten Direktzugriff, die Informationen enthalten, die für das Zufallsauswahlverfahren repräsentativ sind, tatsächlich zufälliger Art sind.

11. Verfahren nach einem der Ansprüche 1 bis 10, wobei der Zugangspunkt ferner in jedem Rahmen zur Auslösung eines Verfahrens für koordinierten Direktzugriff, für den der Zugangspunkt das freie Auswahlverfahren gewählt hat, Informationen einfügt (308), die für eine Auswahlregel aus einer vorgegebenen Menge von Auswahlregeln repräsentativ sind, die jedes betroffene Endgerät anwenden soll, um eine der Frequenzressourcen aus der Menge von Kandidaten-Frequenzressourcen, die vom Zugangspunkt in dem Rahmen zur Auslösung eines Verfahrens für koordinierten Direktzugriff unterbreitet werden, frei auszuwählen.

12. Verfahren nach einem der Ansprüche 1 bis 11, wobei der Zugangspunkt in Baken, die vom Zugangspunkt gesendet werden, um das Drahtloskommunikationsnetz zu synchronisieren, angibt, dass der Zugangspunkt geeignet ist, Verfahren für koordinierten Direktzugriff auszulösen.

13. Verfahren nach Anspruch 12, wobei der Zugangspunkt in Baken, die vom Zugangspunkt gesendet werden, um das Drahtloskommunikationsnetz zu synchronisieren, eine Information angibt, die für nächste Übertragungszeitpunkte eines Rahmens zur Auslösung eines Verfahrens für koordinierten Direktzugriff repräsentativ ist.

14. Informationsspeichermedium, auf dem ein Computerprogramm gespeichert ist, das Anweisungen umfasst, um durch einen Prozessor eines Zugangspunkts eines Drahtloskommunikationsnetzes das Verfahren nach einem der Ansprüche 1 bis 13 zu implementieren, wenn das Programm von dem Prozessor ausgeführt wird.

15. Zugangspunkt (AP 110) zur Verwaltung eines Drahtloskommunikationsnetzes (120), mit dem eine Mehrzahl von Endgeräten (T 111, 112, 113) verbunden ist, wobei der Zugangspunkt dazu ausgebildet ist, im Drahtloskommunikationsnetz Rahmen zur Auslösung eines Verfahrens für koordinierten Direktzugriff zu übertragen, wobei jeder Rahmen zur Auslösung eines Verfahrens für koordinierten Direktzugriff jedem Endgerät, an welches der Rahmen gerichtet ist, eine Möglichkeit zum Zugriff auf das Medium des Drahtloskommunikationsnetzes bietet, wobei jedes Endgerät, das die Möglichkeit zum Zugriff auf das Medium nutzt, in Reaktion auf den Rahmen eine Aufwärts-OFDMA-Übertragung zum Zugangspunkt durchführt,
**dadurch gekennzeichnet, dass** der Zugangspunkt dazu ausgebildet ist, in jeden Rahmen zur Auslösung eines Verfahrens für koordinierten Direktzugriff Informationen einzufügen (303, 308), die für ein Frequenzressourcen-Auswahlverfahren repräsentativ sind, das von dem Zugangspunkt nach einer vorgegebenen Richtlinie aus den beiden folgenden ausgewählt wird:
- einem Zufallsauswahlverfahren, bei dem jedes betroffene Endgerät eine Frequenzressource aus einer Menge von Kandidaten-Frequenzressourcen, die vom Zugangspunkt in dem Rahmen zur Auslösung eines Verfahrens für koordinierten Direktzugriff unterbreitet werden (304, 308), zufällig auswählen soll; und
- einem freien Auswahlverfahren, bei dem jedes betroffene Endgerät eine Frequenzressource aus einer Menge von Kandidaten-Frequenzressourcen, die vom Zugangspunkt in dem Rahmen zur Auslösung eines Verfahrens für koordinierten Direktzugriff unterbreitet werden (304, 308), frei auswählen soll.

## Claims

1. Method implemented by an access point (AP 110) of a wireless communication network (120) to which a plurality of terminals (T 111, 112, 113) is connected, the access point transmitting in the wireless communication network frames triggering coordinated random access procedure, each frame triggering coordinated random access procedure offering an opportunity for access to the medium of said wireless communication network to each terminal for which said frame is intended, each terminal that seizes said opportunity for access to the medium performing an OFDMA uplink transmission toward said access point in response to said frame,
**characterised in that** the access point includes (303, 308), in each frame triggering coordinated random access procedure, information representing a method of selecting a frequency resource, chosen by said access point according to a predefined policy, among the following two:
- a random selection method, according to which each terminal concerned is supposed to randomly select a frequency resource among a set of candidate frequency resources submitted (304, 308) by said access point in said frame triggering coordinated random access procedure; and
- a free selection method, according to which each terminal concerned is supposed to freely select a frequency resource among a set of candidate frequency resources submitted (304, 308) by said access point in said frame triggering coordinated random access procedure.

2. Method according to claim 1, wherein the access point further includes (306, 308), in each frame triggering coordinated random access procedure, information representing a power of transmission of said frame by said access point.

3. Method according to any one of claims 1 and 2, wherein the access point further includes (307, 308), in each frame triggering coordinated random access procedure, information representing a transmission power expected by said access point in receiving each OFDMA uplink transmission performed in response to said frame.

4. Method according to any one of claims 1 to 3, wherein the access point transmits (309) each frame triggering coordinated random access procedure at least via the candidate frequency resources submitted in said frame and among which the terminals for which said frame is intended are supposed to perform the frequency resource selection in order to perform the OFDMA uplink transmissions in response to said frame.

5. Method according to any one of claims 1 to 4, wherein the access point further includes (305, 308), in each frame triggering coordinated random access procedure, information representing the least robust modulation and coding scheme allowed by said access point for making each OFDMA uplink transmission in response to said frame.

6. Method according to any one of claims 1 to 5, wherein the access point collects (508) first statistics relating to the resources selected by said mobile terminals for performing the OFDMA uplink transmissions in response to the frames triggering coordinated random access procedure which include information representing the free selection method.

7. Method according to claim 6, wherein the access point determines (603) the candidate frequency resources submitted in each frame triggering coordinated random access procedure, according to said first statistics collected vis-a-vis terminals for which said frame triggering coordinated random access procedure is intended.

8. Method according to any one of claims 6 and 7, wherein the access point performs (703) a grouping of terminals for which a frame triggering coordinated random access procedure is intended, according to said first statistics collected vis-a-vis terminals connected to the wireless communication network.

9. The method according to any one of claims 1 to 8, wherien the access point collects (504) second statistics relating to the resources selected by said terminals for performing the OFDMA uplink transmissions in response to the frames triggering coordinated random access procedure which include information representing the random selection method.

10. Method according to claim 9, wherein the access point checks (505) that the selections of frequency resources for performing the OFDMA uplink transmissions in response to the frames triggering coordinated random access procedure which include information representing the random selection method actually have a random character.

11. Method according to any one of claims 1 to 10, wherein the access point further includes (308), in each frame triggering coordinated random access procedure for which the access point has chosen the free selection method, information representing a selection rule, among a predefined set of selection rules, that each terminal concerned is supposed to apply for freely selecting one said frequency resource among the set of candidate frequency resources submitted by said access point in said frame triggering coordinated random access procedure.

12. Method according to any one of claims 1 to 11, wherein the access point indicates, in beacons sent by the access point for synchronising the wireless communication network, that the access point is able to trigger coordinated random access procedures.

13. Method according to claim 12, wherein the access point indicates, in the beacons sent by the access point for synchronising the wireless communication network, information representing future instants of transmission of a frame triggering coordinated random access procedure.

14. Information storage medium, in which is stored a computer program comprising instructions for implementing, by a processor of an access point of a wireless communication network, the method according to any one of claims 1 to 13, when said program is executed by said processor.

15. Access point (AP 110) intended to manage a wireless communication network (120) to which a plurality of terminals (T 111, 112, 113) are connected, the access point being configured to transmit in the wireless communication network frames triggering coordinated random access procedure, each frame triggering coordinated random access procedure offering an opportunity for access to the medium of said wireless communication network to each terminal for which said frame is intended, each terminal that seizes said opportunity for access to the medium performing an OFDMA uplink transmission toward said access point in response to said frame,
**characterised in that** the access point is configured to include (303, 308), in each frame triggering coordinated random access procedure, information representing a frequency resource selection method, chosen by said access point according to a predefined policy, among the following two:
- a random selection method according to which each terminal concerned is supposed to randomly select a frequency resource among a set of candidate frequency resources submitted (304, 308) by said access point in said frame triggering coordinated random access procedure; and
- a free selection method, according to which each terminal concerned is supposed to freely select a frequency resource among a set of candidate frequency resources submitted (304, 308) by said access point in said frame triggering coordinated random access procedure.
